# EUROPEAN PATENT APPLICATION

(11) **EP 1 865 466 A1**
(43) Date of publication of application: **12.12.2007**
(21) Application number: 06729894.3
(22) Date of filing: 24.03.2006
(51) Int. Cl.: G06T 7/20, G06T 7/00

(54) **OPERATION DETECTION DEVICE AND OPERATION DETECTION METHOD**

(30) Priority: 28.03.2005 JP 2005091321
(71) Applicant: Kyushu Institute of Technology, Tobata-ku Kitakyushu-shi, Fukuoka 8048550 (JP)
(72) Inventor: HAYASHI, Hatsuo, Graduate school of life, Kitakyushu-shi,Fukuola 808-0196 (JP)
(74) Representative: Hengelhaupt, Jürgen
(86) International application number: PCT/JP2006/305946
(87) International publication number: WO 2006/104033

(57) **Abstract**

It is possible to provide an operation detection device capable of accurately detecting/analysing a position and a motion of an object image contained in a dynamic image in real time. The operation detection device includes: edge block detection means (7) for outputting an edge signal when an edge image is contained in an image block of the frame of the edge dynamic image; and motion detection block aggregates (8, 9) in which motion detection blocks detecting the motion of the motion detection direction are arranged to correspond to the respective image blocks. The motion detection block generates time elapse information upon detection of am edge detection signal of an image block adjacent to the opposite to the motion detection direction for the corresponding image block and holds the time elapse information while updating it. When an edge detection signal for the image block corresponding to the motion detection block is outputted, the time elapse information held at that moment is outputted.

## Description

### Technical Field

The present invention relates to an operation detecting technology for detecting and analyzing in real time position and motion of an object image included in a moving image. '

### Background Art

It is a critical issue for a mover to secure the safety during moving. The technology for securing the safety during moving is used for many scenes, e.g., an alarm apparatus for safety driving of vehicles, a navigation apparatus, an automatic operation apparatus, and an automatic cleaner. An operation detecting technology for detecting and analyzing in real time the motion of an object from a captured moving image ahead is essential to realize the apparatuses.

As the technology for detecting the operation of an object image included in the moving image, an operation detecting method using an optical flow is well known. The optical flow is a velocity field at a point on a screen. In this case, two frames containing a frame F1 having a moving image and a frame F2 after a predetermined time are first divided into a plurality of small regions. Subsequently, by searching the small region having the highest correlation with the small regions in the frame F1 from among the frame F2, the optical flow of the small area is calculated. The detection of the optical flow enables information on a moving direction and velocity of the object image and on the depth from a camera.

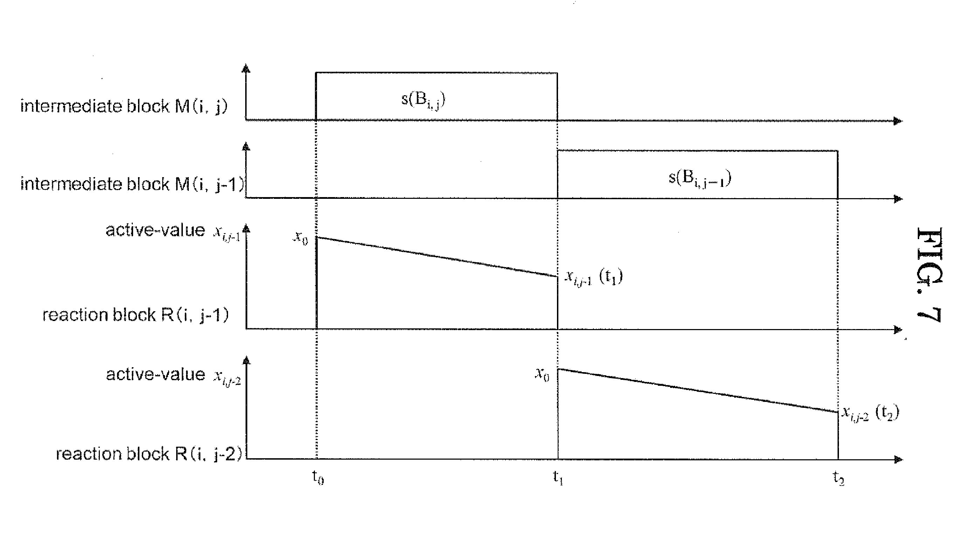

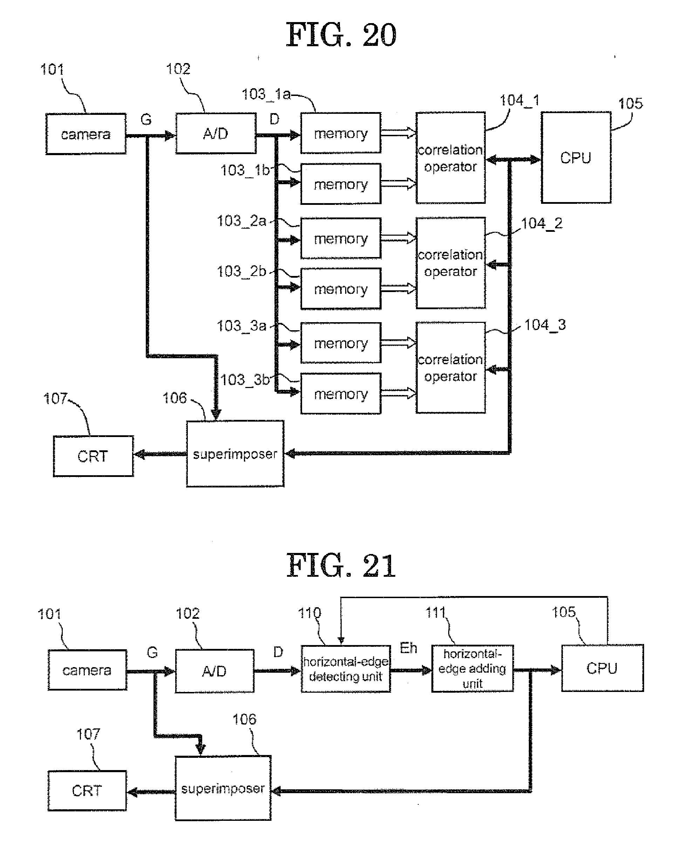

Fig. 20 is a block diagram schematically showing a detecting apparatus of a mover with the optical flow (refer to Patent Document 2 and Fig. 7). Referring to Fig. 20, an image signal G obtained by shooting with a camera 101 is first converted into an image signal D of a digital signal by an A/D converter 102. Two image signals Da and Db at one time and another time after passing a predetermined time from the one time are stored to a pair of memories 103a and 103b. A CPU 105 enables the image data Da and Db of the memories 103a and 103b to be input to a correlation operator 104. The correlation operator 104 performs correlation operation of images of small regions B_{i,j} (∈Db) close to each small region A_{i,j} (∈Da) as a target, and searches for a small region B_{m,n} having the highest correlation in the small area B_{i,j}. Further, the CPU 105 determines whether or not the small region A_{i,j} is moved. Furthermore, the CPU 105 sets the small region B_{m,n} whose movement is determined as correlation data, and allows a superimposer 106 to superimpose the correlation data to an image G. The superimposed image is displayed on a CRT 107.

In the operation of the optical flow, the correlation operation is performed every small region and the amount of calculation is therefore enormous and the processing time is long. Then, upon requesting real-time processing, as shown in Fig. 20, the memories 103a and 103b and the correlation operator 104 are arranged in parallel with each other, thereby increasing the velocity in operation.

As the motion detecting technology using the optical flow mentioned above, e.g., a technology disclosed in Patent Document 1 is well known. With an obstacle detecting method disclosed in Patent Document 1, image capturing means disposed to a vehicle first shoots an image within a predetermined range in an advancing direction of the vehicle. Subsequently, operating means disposed to the vehicle calculates the optical flow with the captured image.

Subsequently, the operating means specifies the advancing direction of the vehicle on an image on the basis of the calculated optical flow. In this case, a plurality of optical flows (V1, V2, V3, ...) are calculated and an infinite point P as a directional point of the vector is thereafter calculated. For example, the vectors V1, V2, and V3, ... are extended in the directions opposite to the vectors, and crosspoints are set as the infinite points P. Then, the infinite point P is recognized as the advancing direction of the vehicle, and a predetermined range with the infinite point P on the image as the center is set as a range (advancing-direction area) for detecting a target obstacle later.

Further, distance measuring means disposed to the vehicle measures the distance to the obstacle existing within a shooting range. Then, the operating means determines from among the distances to the obstacle existing within the shooting range measured in the distance measuring means, on the basis of the distance to the obstacle existing within the predetermined range on the image in the advancing-direction area, whether or not the obstacle is a target one for the vehicle. When the obstacle determining means determines that the obstacle is a target one, warning generating means can output alarm.

As shown in Fig. 20, the parallel arrangement of the memories 103a and 103b and the correlation operator 104 extremely increases the circuit scale, thereby raising the power consumption and costs. Then, Patent Document 2 discloses a mover detecting apparatus that reduces costs with a simple apparatus structure and enables fast processing of image data. Fig. 21 is a block diagram showing the structure of the mover detecting apparatus disclosed in Patent Document 2.

In this case, the A/D converter 102 first converts the image signal G shot by the camera 101 into image data D serving as a digital signal. The image data D is input to a horizontal-edge detecting unit 110. The horizontal-edge detecting unit 110 detects a horizontal edge Eh by setting the difference between a target pixel within the image data D and a pixel under the target pixel with a predetermined number of pixels. Subsequently, a horizontal-edge adding unit 111 binalizes the detected horizontal edge Eh, thereafter adds the binary horizontal edges, and obtains data serving as the frequency of histogram. The data obtained by the addition result is input to the CPU 105 and the superimposer 106.

The CPU 105 obtains vertical positions q1 and q2 that are not less than a threshold c, from the histogram data (frequency) of the horizontal edge Eh. Further, the vertical position q2 at the lowest position on the screen is set as a candidate position q(tₙ) of the current obstacle. Subsequently, the CPU 105 detects whether or not the obstacle is moved. In this case, the amount of movement of the distance in the vertical direction between a candidate position q(tₙ₋₁) as the obstacle before a predetermined time and the candidate position q(tₙ) of the obstacle detected time is obtained. If the amount of movement is detected, it is determined that the mover exists.

Finally, the superimposer 106 superimposes the image signal G obtained from the camera 101 to the mover obtained by the operation by the CPU 105, and displays the resultant data on the CRT 107. As mentioned above, the simple operation for detecting the histogram of the horizontal edge detects the mover, thereby simplifying the hardware structure and increasing the speed of mover recognizing processing.
[Patent Document 1] Japanese Unexamined Patent Application Publication No. 2004-349926
[Patent Document 2] Japanese Unexamined Patent Application Publication No. 7-280517
[Patent Document 3] Japanese Unexamined Patent Application Publication No. 2003-281543

### [Disclosure of Invention]

### [Means for Solving the Problems]

However, with the method disclosed in Patent Document 1, the calculation of optical flow requires correlation operation of the small region of the image, and this needs operation time to some degree. Therefore, upon detecting in real time the object like the case of detecting the motion of the object from the vehicle moving at high speed, points for operating the optical flows are sampled from the image so as to reduce the amount of operations and processing for detecting the motion from a specific point is required. As a consequence, there is a problem of reduction in precision for detecting the motion.

Further, the method disclosed in Patent Document 2 can detect the mover at high speed with hardware structure having a small number of parts. However, although the mover exists and the detection of the position in the vertical direction is atomized, the position of the mover in the horizontal direction needs to be visually checked. Further, the size of the mover is not known. Furthermore, with respect to the speed of the mover in the image, only the speed in the vertical direction can be detected. In addition, if a plurality of movers simultaneously appear on the screen, only one mover can be detected. Therefore, this method cannot be applied to apparatuses that require high precision for detecting the obstacle, such as a warning apparatus, a navigation apparatus, automatic operating apparatus, and an auto-cleaner.

Then, it is an object of the present invention to provide a motion detecting technology that can detect and analyze in real time, with high precision, position and motion of an object image included within a moving image with a simple hardware structure.

### [Means for Solving the Problems]

Herein, a description will be first given of the basic thinking and the structure and operation according to the present invention.

### [1] Basic thinking of the present invention

In a brain hippocampus C3 field, as a learning result, neurons are wavelike-widened from a signal input portion. This is called radial propagation. The wavelike radius depends on the time for inputting the signal. Therefore, a plurality of signals are input at different positions, the radius of the wave pattern of the neurons caused from the input portions then depends on the signal input time, and the size of radius reflects a relationship of the time sequence of the signals.

Then, the present inventor invents a time-series information processing system that can simultaneously detect, in real time, the position, speed, and direction of one object in the front field-of-view on the basis of a time-series learning mechanism of hippocampus of the radial propagation of the neurons.

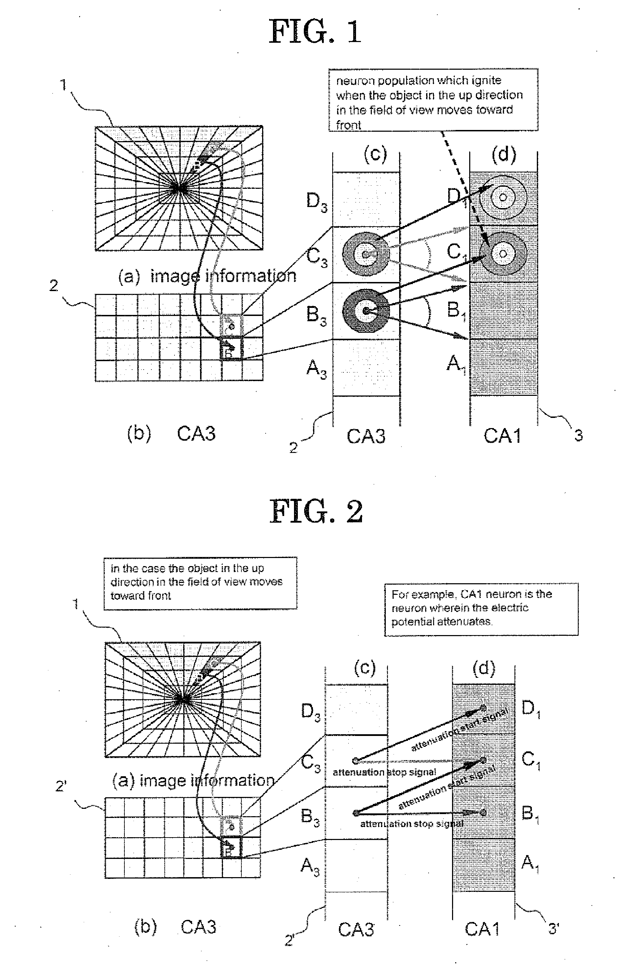

The basic structure of the operation detecting apparatus according to the present invention is obtained by imitating the time-series learning mechanism of the hippocampus as shown in Fig. 1. As the input signal, image information (arrangement of image frames) given on time series is used (refer to Fig. 1(a)). As shown in Fig. 1(a), image frames 1 are sectioned into grids with rectangle having the concentricity of the radius passing through the center. The number of grids, the size of one grid, and the number of pixels in the grid are properly determined depending on the required space resolution and time resolution.

Incidentally, according to the present invention, the grid manner is not limited to that shown in Fig. 1(a) and various manners such as concentric grids and simply-square-shaped grids can be selected.

As the image information, contour (edge image) of the object is used and the existing technology can be used for contour extraction (edge extraction). For example, an output image of a vision chip for detecting in real time the contour of a moving object can be used.

On the other hand, a CA3 net (output layer) 2 sectioned like grids is prepared similarly to the image frame 1. The grid in the CA3 net 2 includes numerous units (neurons) coupled like a net. Fig. 1(b) shows the CA3 net 2 corresponding to the up quadrant upon dividing the image frame 1 shown in Fig. 1(a) into four up, down, left, and right quadrants (hereinafter, referred to as "up quadrant", "down quadrant", "left quadrant", and "right quadrant"). To other quadrants (down quadrant, left quadrant, and right quadrant), the CA3 nets 2 are similarly prepared.

Incidentally, for the purpose of convenience of a description, it is assumed that the CA3 nets 2 are divided every quadrant. However, according to the present invention, a single CA3 net 2 corresponding to all the image frames 1 can be used.

Further, a CA1 net (intermediate layer) 3 corresponding to the CA3 net 2 is prepared (refer to Fig. 1(d)). A grid in the CA1 net 3 includes numerous units (neurons) coupled like a net, similarly to the CA3 net 2.

Further, referring to Fig. 1, grids B and C in the image frame individually correspond to grids B3 and C3 in the CA3 net 2 and grids B1 and C1 in the CA1 net 3, and a grid D3 in the CA3 net 2 shown in Fig. 1(c) corresponds to a grid D1 in the CA1 net 3.

First, in the image frame 1 at time t, a contour (edge image) of an object existing in a grid close to the grid B shown in Fig. 1(a) in the center direction is moved to the grid B. At this time, a signal is sent from the grid B to the unit in the center of the grid B3 within the CA3 net 2, corresponding to the grid B, and excitement is attenuated in the grid B3 and starts to be radially propagated (refer to Fig. 1(c)). Incidentally, Fig. 1(c) enlargedly shows a part of grids shown in Fig. 1(b).

Subsequently, the unit (neuron) in the center of the grid B3 in the CA3 net 2 sends signals to all units in the grid B1 in the corresponding CA1 net 3. A unit at the position except for the center of the grid B3 in the CA3 net 2 sends a signal to a unit having the same relative coordinates in the grid among the units in the grid C1 on the top side of the grid B1 in the CA1 net 3. Thus, in the grid C1, a signal is set to a region having the same wave pattern as that of the excitement in the grid B3.

Subsequently, at time t+1, the image frame 1 at the next time is input. In the image frame 1 at the next time, the contour of the object is moved up, and the contour of the object that touches the grid B at the time t is moved to the grid C at time t+1. In this case, a signal is sent to the unit in the center of the corresponding grid C3 in the CA3 net 2 from the grid C. The unit in the center of the grid C3 sends signals to all grids C1 in the CA1 net 3. Therefore, the circular-shaped unit in the grid C1, matching the signal sent from the wave-pattern-shaped region for radial propagation of the grid B3 ignites.

The radial propagation of the grid B3 is attenuated as the time passes. Therefore, the strength of ignition of the circular-shaped region in the grid C1 becomes weak depending on the radius of the wave pattern of the grid B3. Thus, the strength of output of the grid C1 in the CA1 net 3 becomes a monotone increasing function with respect to the speed for moving up the object. Further, the radius of the ignition circular-shaped region in the grid C1 becomes a monotone decreasing function, as compared with the speed for moving up the object.

Therefore, the positional coordinate of a block C in the image frame 1 corresponding to the ignition grid C1 indicates the position of the contour of the moving object. Furthermore, the ignition strength (or circular radius) of the circular-shaped reign that ignites in the grid C1 indicates the speed in the up direction of the moving object. As mentioned above, the position and speed of the moving object can be detected in real time.

Although the description is given of the detecting method of the object that moves in the up direction here, the motion in another direction can be detected with the same method. The direction for detecting the motion of the object is referred to as "motion detecting direction". In this case, the unit at the position except for the center of the grid B3 in the CA3 net 2 sends a signal to a unit having the same relative coordinate in the grid, from among the units in the grid C1 close to the grid B1 in the CA1 net 3 in the motion detecting direction. As a consequence, it is possible to detect the position of the object moving in the motion detecting direction and the speed in the motion detecting direction.

As mentioned above, one grid in the CA3 net 2 contains numerous units. Actually, one device may store the delay of excitement. That is, in the case of considering the operation detecting apparatus according to the present invention, the phenomenon of the excitement propagation itself is not necessarily used and the delay corresponding to the propagation delay may be obtained. Therefore, as shown in Fig. 2, a grid C1 in a CA1 net 3' may include one unit that starts the attenuation of voltage, current, or the amount of charges by a trigger signal from a unit of the grid B3 in a CA3 net 2'. The attenuation of the device is stopped by inputting a signal from the unit of a grid C3 in the CA3 net 2'. Then, the voltage, current, and the amount of charges in this case indicate information on the moving speed of the object.

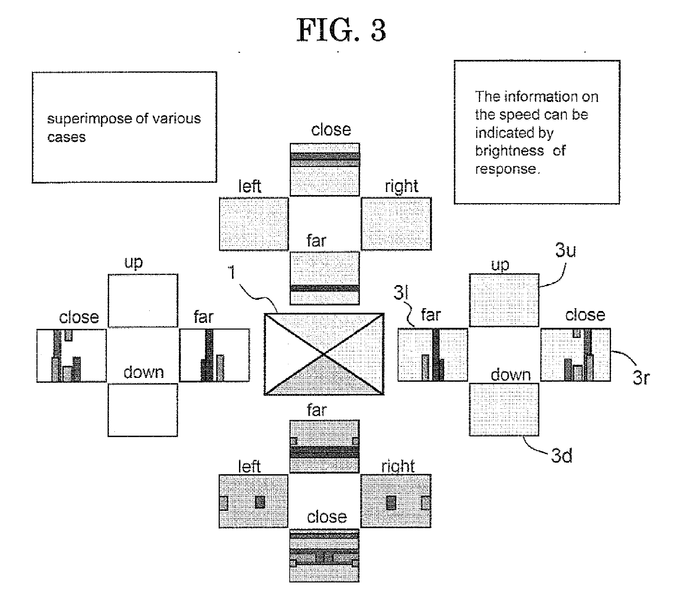

The above-mentioned operation detecting apparatus can detect only the motion of the object in the up direction. Then, in addition to the detection of motion of the object in the up direction, a C1 net 3 for detecting the motion of the object in the down direction, left direction, and right direction is arranged. Referring to Fig. 3, an example is shown in which the total four CA3 nets (not shown) are arranged to four quadrants (up quadrant, down quadrant, left quadrant, and right quadrant) of the image frame 1 and C1 nets 3u, 3d, 31, and 3r for detecting the motion of the object in the up direction, down direction, left direction, and right direction are arranged to the CA3 nets. Four CA3 nets 2 and four C1 nets 3 are arranged because the complicated wiring is prevented. In the case of low resolution to which the wiring is not considered, one CA3 net 2 and one C1 net 3 can be used by switching the motion detecting direction.

Further, as nets for detecting the motion of the object in the left direction, down direction, and right direction, the CA3 net 2 and the CA1 net 3 for detecting the up direction may be used with rotation of 90°, 180°, and 270°, and any additional CA nets are not necessary. As will be described later, advantageously, the possibility for collision of objects in the image frame 1 can be patterned and displayed by properly arranging the CA1 net 3 that is specified in the up, down, left, or right direction.

### [1] Structure of the present invention

With the first structure of an operation detecting apparatus according to the present invention, an operation detecting apparatus comprises: edge block detecting means that sequentially reads frames of a moving image subjected to edge extracting processing, detects whether or not an image block includes an edge image upon dividing pixels in the frame into the blocks, and outputs an edge detecting signal of the image block including the edge image; an output layer having a plurality of intermediate blocks corresponding to each of the image blocks; and an intermediate layer having a plurality of reaction blocks corresponding to the intermediate blocks. In the operation detecting apparatus, the intermediate block is activated upon outputting the edge detecting signal corresponding to the image block, the reaction block initializes an active value in accordance with the activation of the intermediate block adjacent to a corresponding intermediate block serving as the reaction block corresponding thereto in the opposite direction of a motion detecting direction of the intermediate block, holds the active value after the initialization for a predetermined period while changing the active value in accordance with a monotone function on time series, and outputs, as an ignition signal, information on the level of the active value stored upon activating the corresponding intermediate block.

With this structure, when the edge image is moved to one image block B, at the output layer, an intermediate block B₃ corresponding to the image block B is activated. Further, at the intermediate layer, the intermediate block B₃ is activated and then an active value of a reaction block C₁ corresponding to an intermediate block C₃ adjacent to the intermediate block B₃ in the motion detecting direction is initialized. At the reaction block C₁, while there is the edge image in the image block B, the active value is changed over time in accordance with a monotone function and is held for a predetermined period.

When the edge image is moved from the image block B to the image block C (image block corresponding to the intermediate block C₃), the intermediate block C₃ corresponding to the image block C is activated. In this case, at the intermediate layer, the reaction block C₁ corresponding to the intermediate block C₃ outputs, as an ignition signal, information on the level of the active value held. The level of the active value has a one-to-one-correspondence to the time required for moving the edge image in the image block B, and indicates the speed component of the edge image in the motion detecting direction. Therefore, at the intermediate layer, in addition to the position and speed of the edge image whose motion is detected, the motion direction can be two-dimensionally detected in real time.

In the second constitution of an operation detecting apparatus according to the present invention, with the first constitution, the reaction block comprises: a plurality of reaction units that are connected in order and hold the active values; active-value initializing means that initializes the active value of the head reaction unit in accordance with the activation of the adjacent intermediate block; active-signal transmitting means that transmits the active values of the reaction units in the front order to the reaction units in the back order; and elapsed-time information output means that outputs, upon activating the corresponding intermediate block, information on the order of the reaction units that hold the active values, as ignition signals.

As mentioned above, even with order information of the reaction unit that holds the active value in place of using the active value, the speed component of the motion detecting direction of the edge image can be similarly detected.

With the third constitution of an operation detecting apparatus according to the present invention, an operation detecting apparatus comprises: edge block detecting means that sequentially reads frames of a moving image subjected to edge extracting processing, detects whether or not an image block includes an edge image upon dividing pixels in the frame into the blocks, and outputs an edge detecting signal of the image block including the edge image; an output layer having a plurality of intermediate blocks corresponding to the image blocks; and an intermediate layer having a plurality of reaction blocks corresponding to the intermediate blocks. In the operation detecting apparatus, the intermediate block is activated upon outputting the edge detecting signal corresponding to the image block, initializes the active value into an initial value, and holds the active value after the initialization for a predetermined period while changing the active value in accordance with a monotone function on time series, and the reaction block adds the active value of an adjacent intermediate block serving as the intermediate block adjacent to the corresponding intermediate block in the opposite direction of the motion detecting direction to the active value of the corresponding intermediate block, and outputs, as the ignition signal, information on the level of the active value when the addition value is not less than a predetermined threshold set larger than the initial value.

With this constitution, when the edge image is moved to one image block B, at the output layer, an intermediate block B₃ corresponding to the image block B is activated and an active value x_{B} is initialized. At the intermediate block B₃, while the edge image exists in the image block B, the active value x_{B} is changed over time in accordance with the monotone increasing function and is simultaneously held for a predetermined period. At this time, an active value x_{c} of an intermediate block C₃ corresponding to the image block C adjacent to the image block B in the motion detecting direction is 0. At the intermediate layer, at a reaction block C₁ corresponding to the intermediate block C₃, the active value x_{B} and the active value x_{C} are added, and it is determined whether or not this addition value x_{B}+x_{C} is a threshold. At this time, the reaction block C₁ does not ignite because the addition value is less than the threshold.

When the edge image is moved from the image block B to the image block C, the intermediate block C₃ corresponding to the image block C is activated, and the active value x_{c} is initialized to an initial value. At this time, at the intermediate layer, the reaction block C₁ ignites because the addition value x_{B}+x_{c} is more than the threshold. The reaction block C₁ outputs, as an ignition signal, information on the level of the active value x_{B}. The level of the active value x_{B} has a one-to-one relation to the time necessary for moving the edge image in the image block B, and indicates the speed component of the edge image in the motion detecting direction. Therefore, at the intermediate layer, the position of the edge image whose motion is detected and the speed thereof in the motion detecting direction can be two-dimensionally detected in real time.

In the fourth constitution of an operation detecting apparatus according to the present invention, with the third constitution, the intermediate block comprises: a plurality of reaction units that are connected in order and hold the active values; active-value initializing means that initializes the active value of the head reaction unit in accordance with the activation of the adjacent intermediate block; and active-signal transmitting means that transmits the active values of the reaction units in the front order to the reaction units in the back order. In the operation detecting apparatus, the reaction block comprises elapsed-time information output means that outputs, upon activating the corresponding intermediate block, information on the order of the reaction units that store the active values, as ignition signals.

As mentioned above, even with the order information on the intermediate unit that holds the active value in place of using the active value, the speed component of the edge image in the motion detecting direction can be similarly detected.

The fifth constitution of an operation detecting apparatus according to the present invention, with the constitution any one of first to fourth constitutions, further comprises: an up intermediate-layer that detects the motion in the up direction, a down intermediate-layer that detects the motion in the down direction, a left intermediate-layer that detects the motion in the left direction, and a right intermediate-layer that detects the motion in the right direction, as the intermediate layers.

As mentioned above, by arranging the intermediate layer that detects the motions in the up and down directions, the two-dimensional patterns of the motions of the edge image in all directions can be detected in real time.

The sixth constitution of an operation detecting apparatus according to the present invention, in any one of first to fourth constitutions, further comprises: the four output layers corresponding to four quadrants that obtained by dividing the frame.

As mentioned above, the output layer is divided into four quadrants, thereby simplifying the signal wiring between the output layer and the intermediate layer.

The seventh constitution of an operation detecting apparatus according to the present invention, in the sixth constitution, further comprises: an up intermediate-layer that detects the motion in the up direction, a down intermediate-layer that detects the motion in the down direction, a left intermediate-layer that detects the motion in the left direction, and a right intermediate-layer that detects the motion in the right direction, as the intermediate-layer, to the output layer corresponding to the quadrants.

As mentioned above, by arranging the intermediate layer that detects the motions in the up and down directions, the two-dimensional patterns of the motions of the edge image in all directions can be detected in real time.

The eighth constitution of an operation detecting apparatus according to the present invention comprises: edge block detecting means that that sequentially reads frames of a moving image subjected to edge extracting processing, detects whether or not an image block includes an edge image upon dividing pixels in the frame into the blocks, and outputs an edge detecting signal of the image block including the edge image; and a set of a plurality of motion detecting blocks that detect the motion of the edge image in a predetermined motion detecting direction, aligned to the image blocks. In the operation detecting apparatus, the motion detecting block generates, upon detecting an edge detecting signal of the image block adjacent to a corresponding image block in the opposite direction of the motion detecting direction, elapsed-time information as information on elapsed time from the detecting time, and holds the elapsed-time information while changing the elapsed-time information with a monotone function on time series, and outputs, upon outputting the edge detecting signal of the corresponding image block, the elapsed-time information stored at the output time.

The operations with the constitution are as follows. Herein, for the purpose of convenience of a description, reference numeral B denotes an image block in a frame F(t) at time t of a moving image. Reference numeral s(B) denotes an edge detecting signal in the image block B. Reference numeral M(B) denotes a motion detecting block corresponding to the image block B.

First, the edge block detecting means examines whether or not the image block in a frame F(t₀) includes an edge. Herein, it is detected that an image block B₁ includes the edge and it is detected that an image block B₂ adjacent to the image block B₁ in the motion detecting direction does not include the edge. At this time, the edge block detecting means outputs an edge detecting signal s(B₁). Further, at this time, when a motion detecting block M(B₂) corresponding to the image block B2 detects the edge detecting signal s(B₁), the edge block detecting means generates elapsed-time information Δₜ(B₂)=f(t-t₀) as information on elapsed time from the detecting time to. The elapsed-time information Δₜ(B₂) is sequentially updated over time. Herein, a function f(t) may be any function as a monotone function with respect to t.

On the other hand, at the motion detecting block (B₁) corresponding to the image block B₁, the edge detecting signal s(B₁) is detected and then elapsed-time information Δₜ(B₁) stored at the time is output. Herein, Δₜ(B₁) is not stored and any information is not output.
Subsequently, the edge image in the moving image is moved and the edge is moved at time t₁ from the image block B₁ to the image block B₂. At this time, the edge block detecting means outputs an edge detecting signal s(B₂).
Then, the motion detecting block M(B₂) corresponding to the image block B₂ outputs elapsed-time information Δₜ(B₂)=t₁-t₀ stored at the time.

As mentioned above, by detecting the position of the motion detecting block M(B) that outputs the elapsed-time information Δₜ(B), the position of the image block B corresponding to it can be known. Further, it can be detected that the edge image to be moved to the position of the image block B exists.

Further, the value of elapsed-time information Δₜ(B) has a one-to-one relation to the speed of the edge image in the motion detecting direction. That is, if the elapsed-time information Δₜ(B) is known, the speed of the edge image in the motion detecting direction can be uniquely obtained.

Therefore, the position of the object that is moved in the motion detecting direction can be two-dimensionally detected in real time. Similarly, the speed of the object in the motion detecting direction can be detected in real time.

Herein, it is possible to use, as the "elapsed-time information", various information such as voltage value information, current-value information, information on the amount of charges, and positional information on signals that are propagated over time.

' The ninth constitution of an operation detecting apparatus according to the present invention, in the eighth constitution, further comprises: motion determining means that determines, when the motion detecting block outputs the elapsed-time information, the type of motion on the basis of the position of the image block that outputs the elapsed-time information in the frame and a pattern of the elapsed-time information.

With this constitution, the type of motion of the object can be detected in real time from the patterns of the position and speed of the moving object in the moving image.

The tenth constitution of an operation detecting apparatus according to the present invention, in the eighth or ninth constitution, further comprises: the set of motion detecting blocks corresponding to the up, down, left, and right motion detecting directions.

As mentioned above, a set of blocks for detecting the motions in the up, down, left, and right directions is provided, thereby detecting the motions of the object image in all directions in the moving image.

With the eleventh constitution of an operation detecting apparatus according to the present invention, in any one of the eighth to tenth constitutions, the motion detecting block comprises: an intermediate block that outputs an active signal and an output trigger signal in accordance with the edge detecting signal; and a reaction block that generates and outputs elapsed-time information on the basis of the active signal and output trigger signal. Further, in the operation detecting apparatus, the reaction block comprises: active-value storing means that stores a specific active value; active-value initializing means that sets the active value as a predetermined initial value upon starting to inputting the active signal; active-value changing means that changes the active value on time series in accordance with an active-value changing function serving as a predetermined monotone function; and elapsed-time information output means that outputs, upon inputting the output trigger signal, an output value as a value calculated by the active value at the time or a predetermined output function from the active value as the elapsed-time information, and the intermediate block outputs, upon outputting an edge detecting signal of the image block corresponding to the motion detecting block, the output trigger signal to the reaction block belonging to the motion detecting block, and further outputs the active signal to the reaction block belonging to a motion detecting block adjacent to the motion detecting block in the motion detecting direction.

With this constitution, time information from the time for detecting the edge image in one image block to the time for moving the edge image to the image block adjacent to the image block in the motion detecting direction is stored as the active value in the reaction block. Therefore, with an output value from elapsed-time information output means, the moving speed of the edge image in the motion detecting direction can be detected. Further, the position of the edge image can be detected with the position of the image block corresponding to the reaction block from which the output value is output.

With the twelfth constitution of an operation detecting apparatus according to the present invention, in any one of the eighth to tenth constitutions, the motion detecting block comprises: an intermediate block that outputs an active signal and an output trigger signal in accordance with the edge detecting signal; and a reaction block generates and outputs the elapsed-time information on the basis of the active signal and output trigger signal, and the reaction block comprises: a reaction unit array having a plurality of reaction units for holding the active signal, aligned in order; active-signal transmitting means that sequentially transfers or propagates the active signal on time series from the head reaction unit to the last reaction unit; and elapsed-time information output means that outputs, upon inputting the output trigger signal, order information of the array of reaction units of the reaction units that stores the active signal as the elapsed-time information, and the intermediate block outputs, upon outputting an edge detecting signal of the image block corresponding to the motion detecting block, the output trigger signal to the reaction block belonging to the motion detecting block, and further outputs the active signal to the head reaction unit on the array of reaction units of the reaction blocks belonging to the motion detecting block adjacent to the motion detecting block in the motion detecting direction.

With this constitution, time information from the time for detecting the edge image in one image block to the time for moving the edge image to the image block adjacent to the one image block in the motion detecting direction is stored to the reaction block as the order of reaction units for storing the active value. Therefore, with the order information output from the elapsed-time information output means, the moving speed of the edge image in the motion detecting direction can be detected. Further, with the position of the image block corresponding to the reaction block from which the output value is output, the position of the edge image can be detected.

With the thirteenth constitution of an operation detecting apparatus according to the present invention, in the twelfth constitution, the active-signal transmitting means sequentially transfers or propagates the active signal in accordance with a predetermined active-value changing function from the head reaction unit to the last reaction unit while changing the active signal on time series, and the elapsed-time information output means outputs a value of the active signal, upon inputting the output trigger signal, as the elapsed-time information.

With this constitution, time information from the time for detecting the edge image in one image block to the time for moving the edge image to the image block adjacent to the one image block in the motion detecting direction is stored to the reaction block, as the active value of the reaction unit that stores a value (active value) of the active signal. Therefore, with the active value output from the elapsed-time information output means, the moving speed of the edge image in the motion detecting direction can be detected. Further, with the position of the image block corresponding to the reaction block from which the output value is output, the position of the edge image can be detected.

With the fourteenth constitution of an operation detecting apparatus according to the present invention, in any one of the eighth to tenth constitutions, the motion detecting block comprises: an intermediate block that outputs the active signal and output trigger signal in accordance with the edge detecting signal; and a reaction block that generates and outputs the elapsed-time information on the basis of the active signal and output trigger signal, the reaction block comprises: a reaction net that two-dimensionally connects a plurality of reaction units for storing the active signal via a link; active-signal transmitting means that transfers or propagates, with respect to two reaction units connected via the link on the reaction net, the active signal of the reaction unit on the input side of the link to the reaction unit on the output side of the link on time series; and elapsed-time information output means that outputs, upon inputting the output trigger signal, distribution range information of the reaction units for storing the active signal, on the reaction net, as the elapsed-time information, and the intermediate block outputs, upon outputting an edge detecting signal of the image block corresponding to the motion detecting block, the output trigger signal to the reaction block belonging to the motion detecting block, and further outputs the active signal to the reaction unit in the center of the reaction net of the reaction blocks belonging to the motion detecting block adjacent to the motion detecting block in the motion detecting direction.

With this constitution, time information from the time for detecting the edge image in one image block to the time for moving the edge image to the image block adjacent to the one image block in the motion detecting direction is stored to the reaction block, as the distribution range (radius and area of distribution, etc.) of the reaction unit for storing the active signal. Therefore, with information on the distribution range output from the elapsed-time information output means, the moving speed of the edge image in the motion detecting direction can be detected. Further, with the position of the image block corresponding to the reaction block from which the output value is output, the position of the edge image can be detected.

With the fifteenth constitution of an operation detecting apparatus according to the present invention, in the fourteenth constitution, the active-signal transmitting means sequentially transfers or propagates, with respect to two reaction units connected via a link on the reaction net, the active signal of the reaction unit on the input side of the link to the reaction unit on the output side of the link while changing the active signal in accordance with a predetermined active-value changing function, and the elapsed-time information output means outputs, upon inputting the output trigger signal, a value of the active signal as the elapsed-time information.

With this constitution, time information from the time for detecting the edge image in one image block to the time for moving the edge image to the image block adjacent to the one image block in the motion detecting direction is stored to the reaction block, as the active value of the reaction unit for storing a value (active value) of the active signal. Therefore, with the active value output from the elapsed-time information output means, the moving speed of the edge image in the motion detecting direction can be detected. Further, with the position of the image block corresponding to the reaction block from which the active value is output, the position of the edge image can be detected.

With the sixteenth constitution of an operation detecting apparatus according to the present invention, in any one of the eighth to tenth constitutions, the motion detecting block comprises: an intermediate block having an intermediate net that two-dimensionally connects a plurality of intermediate units for storing the active signal via a link; and a reaction block having a plurality of reaction units arranged to the individual intermediate units in the intermediate block, and the edge block detecting means sequentially reads the frames, detects whether or not the image block in the frame includes the edge image, outputs the edge detecting signal to a center intermediate unit as an intermediate unit in the center of the intermediate net in the intermediate block corresponding to the image block including the edge image, the intermediate block comprises: active-value initializing means that initializes, upon inputting the active signal to the center intermediate unit, the active signal stored in the center intermediate unit into an initial value, and thereafter outputs the active signal to all reaction units in the reaction block belonging to the motion detecting block; active-signal transmitting means that attenuates, with respect to two intermediate units connected by a link on the intermediate net, the active signal of the intermediate unit on the input side of the link and transfers or propagates the active signal to the intermediate unit on the output side of the link on time series; active-signal transfer means that outputs, with respect to the intermediate units other than the center intermediate unit, the active signal held in the reaction unit whose relative position in the adjacent reaction blocks is the same relative position of that of the intermediate unit, from the reaction units in the adjacent reaction blocks serving as the reaction block corresponding to the intermediate block adjacent to the intermediate block in the motion detecting direction, and the reaction unit in the reaction block comprises: active-signal holding means that stores the active signal input from the active-signal transfer means; reaction signal attenuating means that attenuates the active signal stored in the active-signal holding means; active-signal updating means that updates the active signal stored in the active-signal holding means by adding a value of the input active signal to a value of the active signal stored in the active-signal holding means, when the active-signal transfer means or the active-value initializing means inputs the active signal; and ignition means that outputs, when the active signal stored in the active-signal holding means is over a predetermined threshold, the active signal or ignition signal as the elapsed-time information.

With this constitution, time information from the time for detecting the edge image in one image block to the time for moving the edge image to the image block adjacent to the one image block in the motion detecting direction is stored to the reaction block, as the distribution range (radius and area of the distribution, etc.) of the reaction unit for storing the active signal and the active value. Therefore, with the information on the distribution range of the igniting reaction unit or output value thereof, the moving speed of the edge image in the motion detecting direction can be detected. Further, with the position of the image block corresponding to the reaction block that outputs an ignition signal, the position of the edge image can be detected.

With the seventeenth constitution of an operation detecting apparatus according to the present invention, in any one of the eleventh to sixteenth constitutions, the motion detecting block comprises one intermediate block and four reaction blocks corresponding to up, down, left, and right motion detecting directions.

With this constitution, with the motion speeds of the edge image in the up, down, left, and right directions and the position of the edge image moving in the direction can be detected. Further, since the motions in the directions are two-dimensionally detected, the types of motions of the object can be determined by determining the pattern of the two-dimensional motion of the edge image.

With the eighteenth constitution of an operation detecting apparatus according to the present invention, in any one of eleventh to sixteenth constitutions, the motion detecting block comprises: four intermediate blocks corresponding to four up-, down-, left-, and right quadrants obtained by dividing the frame, with respect to the intermediate block; and four reaction blocks corresponding to the intermediate blocks in up, down, left, and right motion detecting directions.

. With this constitution, the individual motions in the quadrants in the frame can be two-dimensionally detected. Therefore, various types of motions of the object can be more precisely determined by determining the pattern of the motion of the edge image in the quadrants in the frame.

A computer readable and executable program enables functioning as the operation detecting apparatus according to any one of the third and eighth to eighteenth.

The first constitution of an operation detecting method according to the present invention, comprises: an edge block detecting step of detecting, with respect to image blocks obtained by dividing a frame of a moving image subjected to edge extracting processing, sequentially-input, into blocks, whether or not the image block includes an edge image and outputting an edge detecting signal of the image block including the edge image; an elapsed-time information generating step of generating, to an adjacent block serving as an image block adjacent to a detecting block serving as the image block having the output edge detecting signal in the motion detecting direction, elapsed-time information serving as information on elapsed time from the start time for continuously outputting the edge detecting signal in the detecting block; and an elapsed-time information output step of outputting the elapsed-time information generated for the adjacent block, upon starting to output the edge detecting signal in the adjacent block.

The second constitution of an operation detecting apparatus according to the present invention, in the first constitution, further comprises: a motion determining step of outputting the elapsed-time information of the image block in the elapsed-time information output step, and thereafter determining the type of motion on the basis of the position of the image block that outputs the elapsed-time information and a pattern of the elapsed-time information.

### [Advantages]

As mentioned above, according to the present invention, it is possible to provide an operation detecting technology that can precisely and two-dimensionally detect and analyze in real time the position and motion of an object image included in a moving image with a simple hardware structure.

### Brief Description of the Drawings

[Fig. 1] Fig. 1 is a diagram showing the basic principle of an operation detecting apparatus according to the present invention.
[Fig. 2] Fig. 2 is a diagram showing an example in which each of grids on a CA3 net 2 and a CA1 net 3 comprises one element.
[Fig. 3] Fig. 3 is a diagram showing the arrangement of the CA1 net 3 to an image frame 1.
[Fig. 4] Fig. 4 is a block diagram showing the hardware structure of an operation detecting apparatus according to the first embodiment of the present invention.
[Fig. 5] Fig. 5 is a block diagram showing the functional structure of the operation detecting apparatus according to the first embodiment.
[Fig. 6] Fig. 6 is a diagram showing a state in which an intermediate block 21 outputs a signal to a reaction block 22.
[Fig. 7] Fig. 7 is a diagram showing the change in active value x of the reaction block on time series.
[Fig. 8] Fig. 8 is a diagram showing a relationship between a motion of an object image on the frame and a pattern of an ignition signal output from a CA1 net 9 (far object is close).
[Fig. 9] Fig. 9 is a diagram showing a relationship between the motion of the object image on the frame and the pattern of the ignition signal output from the CA1 net 9 (adjacent object is close).
[Fig. 10] Fig. 10 is a diagram showing a relationship between the motion of the object image on the frame and the pattern of the ignition signal output from the CA1 net 9 (far object is apart).
[Fig. 11] Fig. 11 is a diagram showing a relationship between the motion of the object image on the frame and the pattern of the ignition signal output from the CA1 net 9 (far object is moved to the right).
[Fig. 12] Fig. 12 is a diagram showing a relationship between the motion of the object image on the frame and the pattern of the ignition signal output from the CA1 net 9 (adjacent down object is close).
[Fig. 13] Fig. 13 is one block diagram showing the functional structure of an operation detecting apparatus according to the second embodiment.
[Fig. 14] Fig. 14 is another block diagram showing the functional structure of the operation detecting apparatus according to the second embodiment.
[Fig. 15] Fig. 15 is a diagram showing one example of the change in edge detecting signal and active signal on time-series.
[Fig. 16] Fig. 16 is a diagram showing another example of the change in edge detecting signal and active signal on time series.
[Fig. 17] Fig. 17 is a block diagram showing the functional structure of an operation detecting apparatus according to the third embodiment.
[Fig. 18] Fig. 18 is a block diagram showing the functional structure of an operation detecting apparatus according to the fourth embodiment.
[Fig. 19] Fig. 19 is a block diagram showing the structure of a reaction unit 41.
[Fig. 20] Fig. 20 is a block diagram schematically showing a detecting apparatus of a mover using an optical flow.
[Fig. 21] Fig. 21 is a block diagram showing the structure of a mover detecting apparatus disclosed in Patent Document 2.

### Reference Numerals

1: image frame
2, 2': CA3 net
3, 3', 3u, 3d, 31, 3r: CA1 net
4: camera
5: edge detecting means
6: frame memory
7: edge block detecting means
8: CA3 net
8a: up-quadrant CA3 net
8b: left-quadrant CA3 net
8c: down-quadrant CA3 net
8d: right-quadrant CA3 net
9: CA1 net
9a: up CA1 net
9b: left CA1 net
9c: down CA1 net
9d: right CA1 net
10: motion determining means
19: set of motion detecting blocks
20: motion detecting block
21: intermediate block
22: reaction block
23: active-value storing means
24: active-value initializing means
25: active-value changing means
26: elapsed-time information output means
31: array of reaction units
32: active-signal transmitting means
33: elapsed-time information output means
34: reaction unit
35: reaction net
36: active-signal transmitting means
37: elapsed-time information output means
38: reaction unit
40: intermediate unit
40c: center intermediate-unit
41: reaction unit
42: active-signal holding means
43: reaction signal attenuating means
44: active-signal updating means
45: ignition means

### Best Mode for Carrying Out the Invention

Hereinbelow, embodiments of the present invention will be described with reference to the drawings.

### [First embodiment]

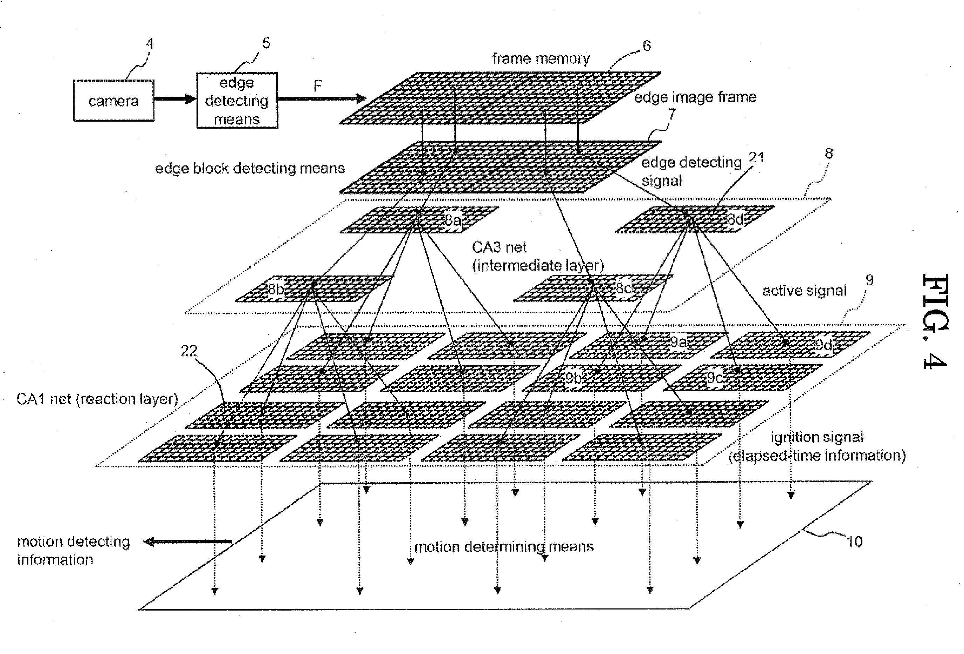

Fig. 4 is a block diagram showing the hardware structure of an operation detecting apparatus according to the first embodiment of the present invention. The operation detecting apparatus according to the first embodiment comprises: a camera 4; edge detecting means 5; a frame memory 6; edge block detecting means 7; a CA3 net (output layer) 8; a CA1 net (intermediate layer) 9; and motion determining means 10.

The camera 4 comprises an image pickup device array such as a CCD. The camera 4 captures a moving image within a field-of-view, and outputs the image as a time-series frame string. The edge detecting means 5 performs edge detecting processing of frames output from the camera 4. Various well-known methods can be applied to the edge detecting processing. For example, various methods including a method for performing a frame image by a first derivation (difference) filter and thereafter binarizing the image, a method using Laplacian (first derivation (difference)) filter can be used. An edge image E in the frame, obtained by the edge detecting processing, is temporarily stored to the frame memory 6.

The edge block detecting means 7 sections the edge image E of one frame stored to the frame memory 6 into predetermined small regions. The small regions are referred to as "image blocks" and are designated by B_{i,j}. Reference numerals I and j denote coordinates of the image block. Herein, the small regions of the frame is radially sectioned with the center of the frame as the origin, as shown in Fig. 1(a).

The edge block detecting means 7 detects whether or not the image block B_{i,j} includes the edge image. An edge detecting signal s(B_{i,j}) is output to the image block B_{i,j} including the edge image.

The CA3 net 8 is a component corresponding to a CA3 net 2 shown in Fig. 1. The CA3 net 8 has a structure having a plurality of intermediate blocks 21 arranged like grids. The intermediate blocks 21 correspond to the image blocks B_{i,j} in the frame. The edge detecting signal s(B_{i,j}) for the image block B_{i,j} output by the edge block detecting means 7 is input to the intermediate block 21 corresponding to the image block B_{i,j}.

When the frame is divided into four quadrants (up-quadrant, left-quadrant, down-quadrant, and right-quadrant), the CA3 net 8 comprise four nets corresponding to the quadrants upon dividing the frame into four ones. The CA3 nets 8 corresponding to the quadrants are referred to as an up-quadrant CA3 net 8a, a left-quadrant CA3 net 8b, a down-quadrant CA3 net 8c, and a right-quadrant CA3 net 8d.

The intermediate blocks 21 in the CA3 net 8 output active signals or output trigger signals to the CA1 net 9 for the input to the edge detecting signal s(B_{i,j}).

The CA1 net 9 is a component corresponding to a CA1 net 3 shown in Fig. 1. The CA1 net 9 comprises the total 16 nets, that is, the up-quadrant CA3 net 8a, left-quadrant CA3 net 8b, down-quadrant CA3 net 8c, and right-quadrant CA3 net 8d, individually having four nets. Four nets corresponding to the CA3 net 8 on one quadrant are referred to as an up CA1 net 9a, a left CA1 net 9b, a down CA1 net 9c, and a right CA1 net 9d. The up CA1 net 9a, left CA1 net 9b, down CA1 net 9c, and right CA1 net 9d are the CA1 nets 9 corresponding to the up, left, down, and right motion detecting directions, respectively. Each of the CA1 nets 9 has reaction blocks 22 arranged corresponding to an intermediate block 21 in the CA3 net 8, aligned like grids.

The reaction blocks 22 in the CA1 net 9 output ignition signals to the motion determining means 10 in response to the active signal or output trigger signal.

The motion determining means 10 calculates the position and speed of one edge image moved in the frame on the basis of elapsed-time information sent in response to the ignition signal input from the CA1 net 9. Further, the motion determining means 10 determines the type of motion from the above-obtained pattern of a two-dimensional motion, and outputs the determined type of motion as motion detecting information.

Incidentally, according to the first embodiment, the four CA3 nets 8 are provided corresponding to four quadrants. However, according to the present invention, the number of CA3 nets is not limited to this. For example, corresponding to the four quadrants, the total 16 of CA3 nets 8 may be provided by individually arranging four CA3 nets 8 for the up, down, left, and right motion detection. In this case, there is a one-to-one relation between the CA3 nets 8 and the CA1 nets 9.

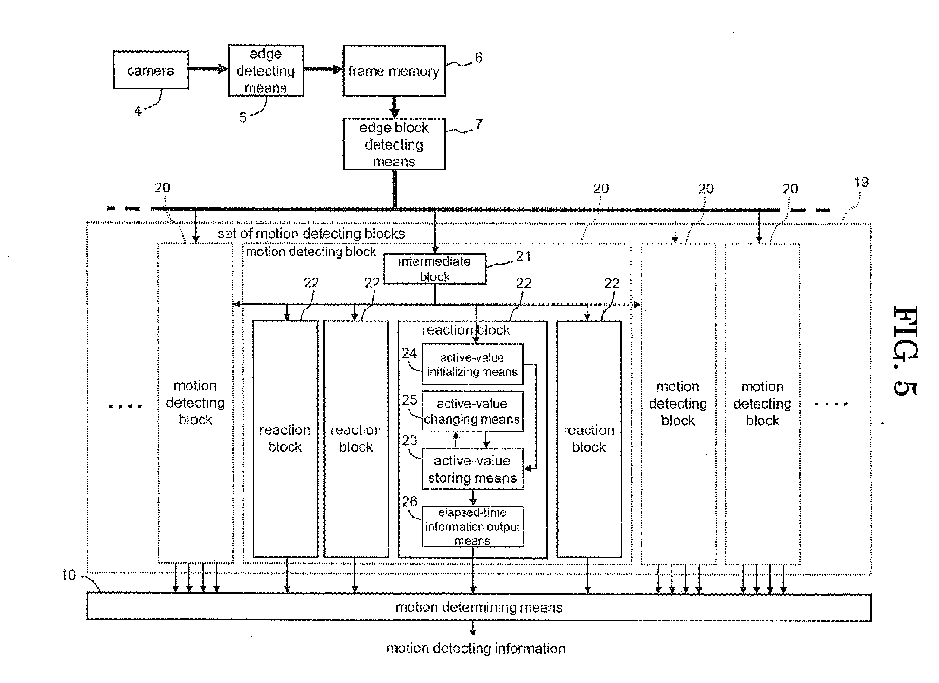

Fig. 5 is a block diagram showing the functional structure of the operation detecting apparatus according to the first embodiment. Referring to Fig. 5, the camera 4, the edge detecting means 5, the frame memory 6, the edge block detecting means 7, and the motion determining means 10 are similar to those shown in Fig. 4.

Further, the CA3 net 8 and the CA1 net 9 shown in Fig. 4 function in corporation with each other as one set of motion detecting blocks 19. The set of motion detecting blocks 19 comprises a set of motion detecting blocks 20 corresponding to the image blocks. Each of the motion detecting blocks 20 comprises a set of one intermediate block 21 in the CA3 net 8 and four reaction blocks 22 in the CA1 net 9 corresponding to the intermediate block 21. The four reaction blocks 22 belong to, corresponding to the intermediate blocks 21, the up CA1 net 9a, the left CA1 net 9b, the down CA1 net 9c, and right CA1 net 9d.

Upon outputting the edge detecting signal s(Bᵢ,ⱼ) corresponding to the image block B_{1,j}, the intermediate block 21 outputs output trigger signals to the four corresponding reaction blocks 22. Simultaneously, the intermediate block 21 outputs the active signal to the reaction block 22 adjacent to the reaction block 22 in the motion detecting direction.

Further, the reaction block 22 comprises: active-value storing means 23; active-value initializing means 24; active-value changing means 25; and elapsed-time information output means 26. The active-value storing means 23 stores an active value x (=x(B_{i,j})) specific to the reaction block 22. Upon starting to input the active signal from the corresponding intermediate block 21, the active-value initializing means 24 sets the active value x of the active-value storing means 23 as a predetermined initial value x₀. The active-value changing means 25 changes the active value x of the active-value storing means 23 in accordance with a function for changing the active value with the time elapse.

Herein, as the function for changing the active value, an arbitrary monotone function f(t) is used with respect to time t. For example, a linear function f(t)=f₀-A·t and an exponential attenuation function f(t)=f₀e^{-αt} can be used.

Upon inputting the output trigger signal from the adjacent intermediate block 21, the elapsed-time information output means 26 outputs the active value (output value) x at the time as the elapsed-time information. Incidentally, the output value from the elapsed-time information output means 26 is not limited to the active value x but may be a value obtained by calculation from the active value x with a predetermined output function F(x).

Incidentally, the above structure may be an LSI chip as a dedicated ASIC (application specific integrated circuit). However, a programmable logical circuit such as an FPGA (field programmable gate array) may be used for portions excluding the camera 4. Further, the functions other than the camera 4 may be realized by the structure of a program and the execution of the program with a CPU (central processing unit).

Hereinbelow, a description will be given of an operation detecting method of the operation detecting apparatus with the above structure according to the first embodiment.

First, a moving image is captured by the camera 4, and frames of the moving images are sequentially input to the edge detecting means 5. The edge detecting means 5 detects the edge for each frame and stores the detected edge as the edge image to the frame memory 6. Thus, the boundary of the object image in the frame is extracted as the edge image.

The edge block detecting means 7 divides the edge image in the frame, stored in the frame memory 6, into image blocks as mentioned above and detects whether or not the image block includes the edge image. Further, the edge block detecting means 7 outputs the edge detecting signal S(B_{i,j}) for the image block B_{i,j} having the edge image to the intermediate block 21 corresponding to the image block B_{i,j}.

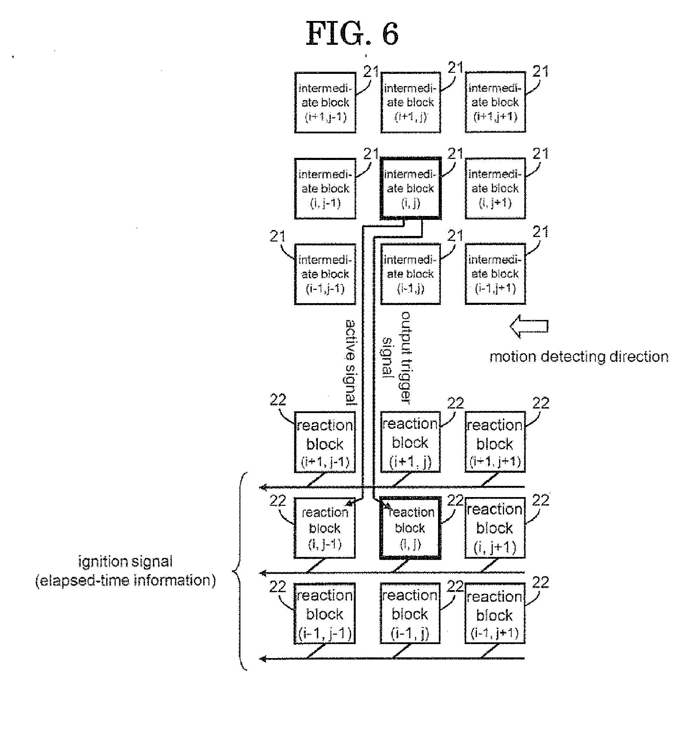

Upon inputting the edge detecting signal s(B_{i,j}), the intermediate block 21 outputs the output trigger signals to four corresponding reaction blocks 22. Further, the intermediate block 21 outputs the active signal to the reaction block 22 adjacent to the corresponding reaction block 22 in the motion detecting direction. This state is shown in Figs. 6 and 7.

Referring to Fig. 6, the motion detecting direction is the left one. Upon inputting the edge detecting signal s(B_{i,j}) to the intermediate block 21 (hereinafter, referred to as an intermediate block M(i,j)) at coordinates (i,j), the intermediate block M(i,j) outputs the output trigger signal to the corresponding reaction block 22 (hereinafter, referred to as a reaction block R(i,j)). On the other hand, the active signal is output to a reaction block R(i,j-1) adjacent to the reaction block R(i,j) in the left direction.

At time this, the change in active value x of the reaction block with the time elapse is as shown in Fig. 7. Referring to Fig. 7, at time t₀, the edge detecting signal s(B_{i,j}) starts to be input to the intermediate block M(i,j). At this timing, the active signal is input to the reaction block R(i,j-1) and the active-value initializing means 24 initializes an active value x_{i,j-1} of the reaction block R(i,j-1) stored in the active-value storing means 23 to a value x₀.

Subsequently, from time to to time t₁, the edge detecting signal s(Bᵢ,ⱼ) is continuously input to the intermediate block M(i,j). During this, the active-value changing means 25 changes the active value x_{i,j-1} of the reaction block R(_{i,j-1}) stored in the active-value storing means 23 in accordance with the function f(t) for changing the active value. As shown in Fig. 7, as the function f(t) for changing the active value, a monotone decreasing function is used.

At time t₁, the edge image is moved from the block B_{i,j} to the block B_{i,j-1}. In accordance with this, the edge detecting signal s(B_{i,j}) to the intermediate block M(i,j) does not exist and the edge detecting signal s (B_{i,j-1}) starts to be input to the intermediate block M(i,j-1). At this time, the output trigger signal is input to the reaction block R(i,j-1) and the reaction block R(i,j-1) outputs, as the ignition signal, an active value xᵢ,ⱼ₋₁ (t_{d} stored in the active-value storing means 23 at time t₁. The active value x_{i,j-1} of the active-value storing means 23 is reset to 0 after outputting the ignition signal.

Similarly, at time t₁, the active signal is input to a reaction block R(i,j-2) and the active-value initializing means 24 of the reaction block R(i,j-2) initializes an active value x_{i,j-2} of the reaction block R(i,j-2) stored in the active-value storing means 23 to the value x₀. Further, the similar operation is repeated.

Herein, when the moving speed of the edge image in the motion detecting direction is fast, the edge image fast passes through the reaction block R(i,j-1). Therefore, the active value x_{i,j-1} output as the ignition signal becomes high. On the contrary, when the moving speed of the edge image in the motion detecting direction is slow, the edge image slowly passes through the reaction block R(i,j-1). Therefore, the active value x_{i,j-1} output as the ignition signal becomes low. Therefore, the active value x_{i,j-1} output as the ignition signal indicates the speed of the edge image in the motion detecting direction.

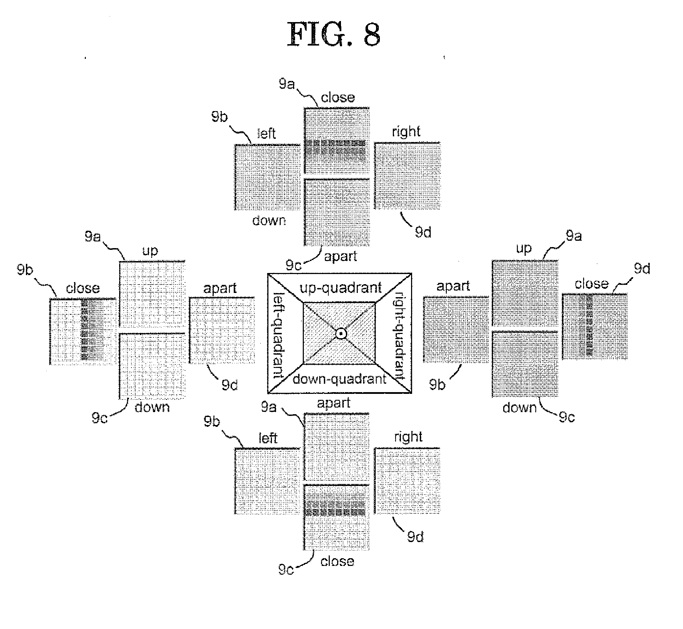

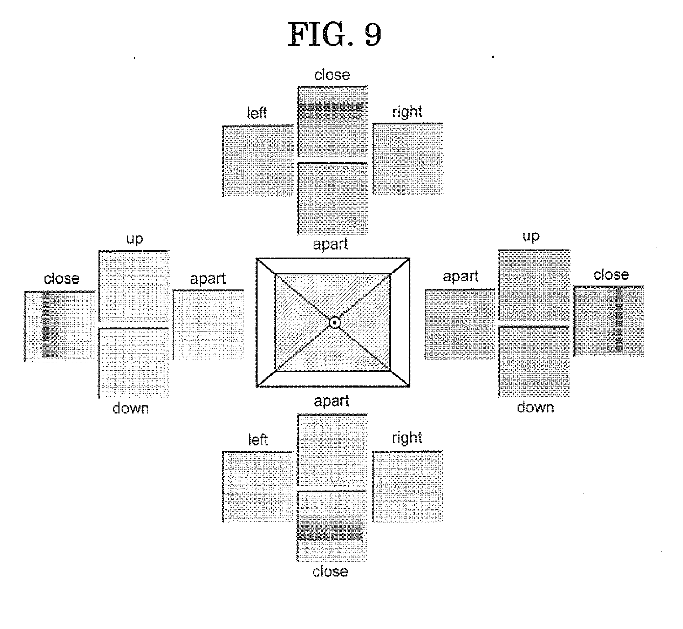

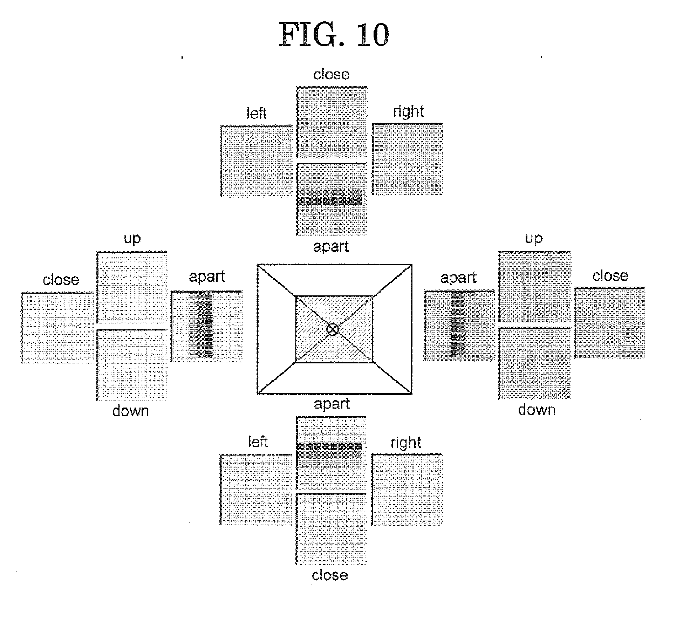

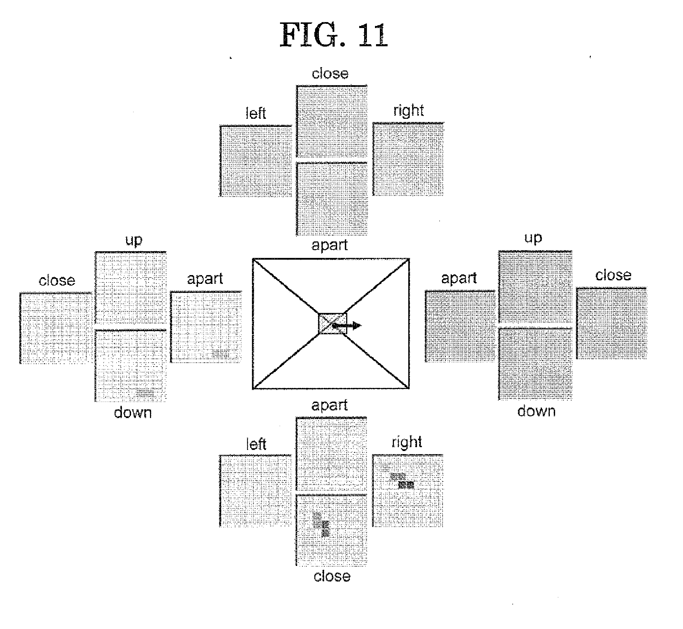

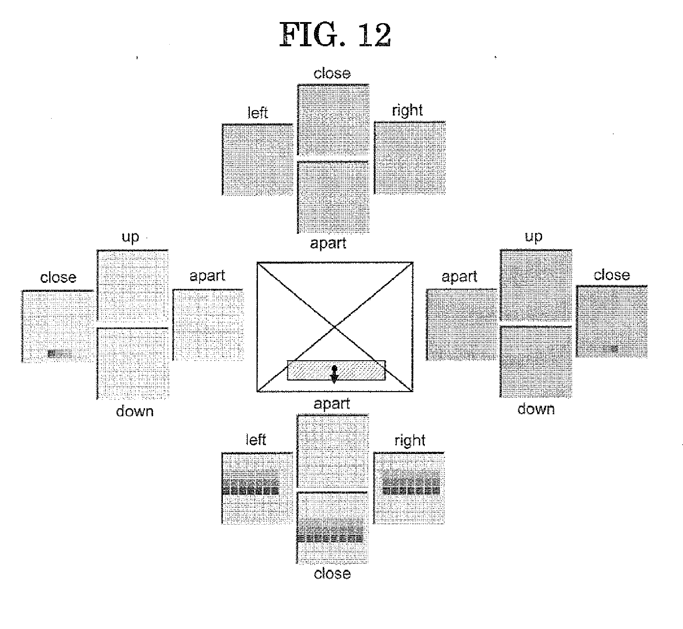

Figs. 8 to 12 are diagrams showing relationships between the motion of the object image in the frame and the pattern of the ignition signal output from the CA1 net 9. Fig. 8 shows the case in which a far object is close. Fig. 9 shows the case in which an adjacent object is close. Fig. 10 shows the case in which a far object is apart. Fig. 11 shows the case in which a far object is moved in the right direction. Fig. 12 shows the case in which the object adjacent in the front down direction is close.

Referring to Figs. 8 to 12, the rectangle in the center indicates an image frame 1 (refer to Fig. 1(a)). The image frame 1 is divided into four up-, down-, left-, and right-quadrants with diagonal boundary axes intercrossing to each other in the center. The center of frame indicates an infinite point. Further, a line (not shown) that passes through the center of frame and is horizontally drawn is a horizontal line. A rectangle shown by an oblique line in the image frame indicates an object. An arrow added to the object indicates the moving direction of the object.

Further, four square nets are shown in the up, down, left, and right directions on the center image frame 1, respectively, and are the CA1 nets 9 (up CA1 net 9a, left CA1 net 9b, down CA1 net 9c, and right CA1 net 9d) corresponding to the up, down, left, and right quadrants.
At the CA1 nets 9, the level of the ignition signal output from the reaction block 22 is shown by shading and, as the reaction block 22 is shown with a darker color, the reaction block 22 outputs a higher active value.

Referring to Figs. 8 and 9, when the object in the center of the image frame 1 is close, the up CA1 net 9a on the up-quadrant, left CA1 net 9b on the left-quadrant, down CA1 net 9c on the down-quadrant, and right CA1 net 9d on the right-quadrant ignite. Therefore, upon detecting the ignition patterns, the motion determining means 10 determines that the object is close from the front side.

Referring to Fig. 10, when the object in the center of the image frame 1 is apart, the down CA1 net 9c on the up-quadrant, right CA1 net 9d on the left-quadrant, up CA1 net 9a on the down-quadrant, and left CA1 net 9b on the right-quadrant ignite. Therefore, upon detecting the ignition patterns, the motion determining means 10 determines that the object on the front side is apart.

Referring to Fig. 11, when the object in the center of the image frame 1 is moved in the right direction, a specific ignition pattern is generated in the down CA1 net 9c and right CA1 net 9d on the down-quadrant. Therefore, upon detecting the ignition pattern, the motion determining means 10 determines that the object on the front side is moved in the right direction.

Referring to Fig. 12, when the object below the image frame 1 is close, a specific ignition pattern is generated in the down CA1 net 9c, left CA1 net 9b, and right CA1 net 9d on the down-quadrant. Therefore, upon detecting the ignition pattern, the motion determining means 10 determines that the adjacent object in the front down direction is close.

As mentioned above, by analyzing the ignition patterns of the CA1 net 9, the motion of the object in the frame can be detected in real time. The determination of the motion and the case of the motion of the object with the motion determining means 10 can be arbitrarily set with the extraction of the amount of characteristics of the pattern, the pattern matching, and the pattern learning.

### [Second embodiment]

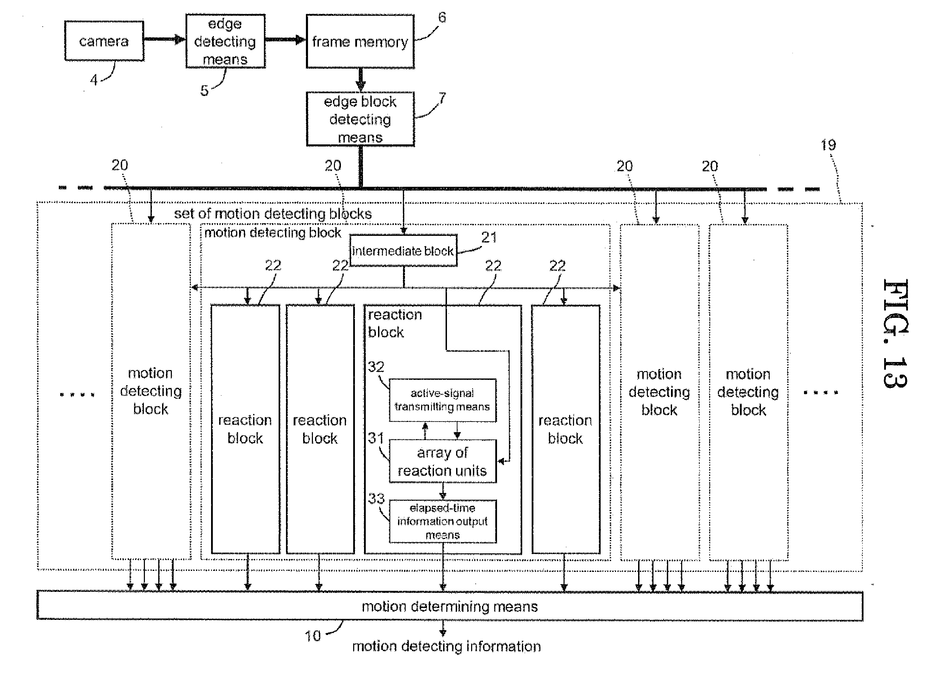

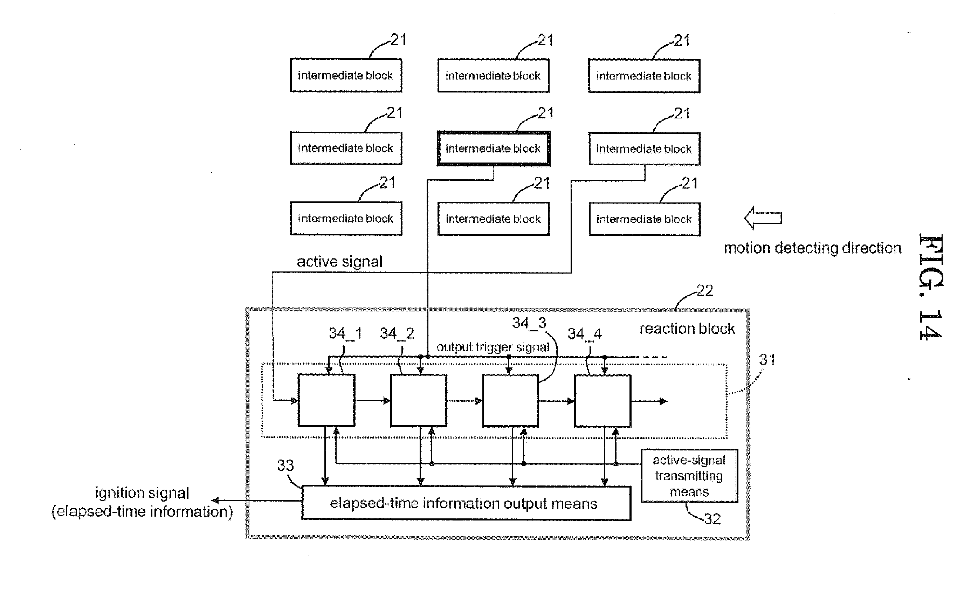

Figs. 13 and 14 are block diagrams showing the functional structure of an operation detecting apparatus according to the second embodiment. Incidentally, the hardware structure of the operation detecting apparatus according to the second embodiment is similar to that shown in Fig. 4 according to the second embodiment. The camera 4, the edge detecting means 5, the frame memory 6, the edge block detecting means 7, the motion determining means 10, and the intermediate block 21 are similar to those according to the first embodiment.

According to the second embodiment, each of the reaction blocks 22 comprises: an array 31 of reaction units, active-signal transmitting means 32, and elapsed-time information output means 33. The array 31 of reaction units has a structure in which a plurality of reaction units 34 for holding the active signal are aligned in the order as shown in Fig. 14 (hereinafter, the reaction units 34 from the head one are designated by reference numerals 34_1, 34_2, 34_3, ..., 34_n).

The active-signal transmitting means 32 sequentially transfers or propagates over time the active signal to the last reaction unit 34_ n from the head reaction unit 34_1. Incidentally, in the case of the structure having an analog circuit, a delay line may be used as the active-signal transmitting means 32.

The elapsed-time information output means 33 outputs, as the ignition signal (elapsed-time information), the order information of the array 31 of reaction units of the reaction unit 34 that holds the active signal upon inputting the output trigger signal from the intermediate block 21.

Incidentally, upon outputting the edge detecting signal of the corresponding image block, the intermediate block 21 outputs the output trigger signal to the corresponding reaction block 22, and outputs the active signal to the head reaction unit 34 1 in the array 31 of reaction units of the reaction block 22 adjacent to the reaction block 22 in the motion detecting direction.

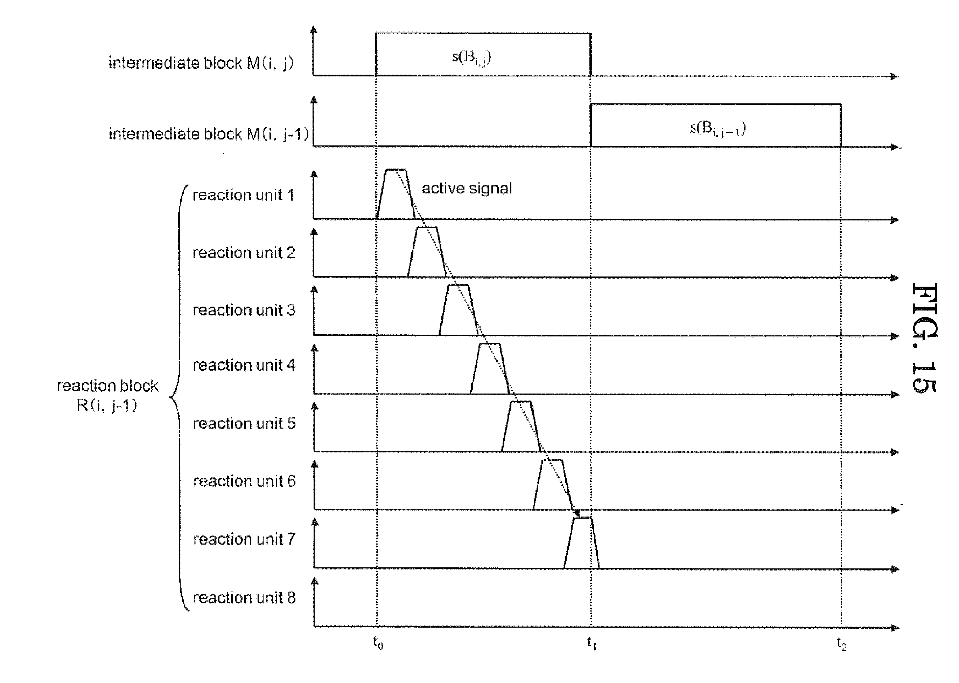

Hereinbelow, a description will be given of the operation detecting method of the operation detecting apparatus with the above structure according to the second embodiment with reference to Fig. 15. Fig. 15 is a diagram showing one example of the time-serial change in edge detecting signal and active signal. Herein, similarly to Fig. 6, an example of the CA1 net 9 in the left motion-detecting direction will be described.

At time t₀, the edge image is moved to the image block B_{i,j}. At this time, the edge detecting signal s(Bᵢ,ⱼ) is input to the intermediate block M(i,j). The intermediate block M(i,j) inputs the active signal to the head reaction unit 34_1 in the reaction block R(i,j-1) adjacent to the corresponding reaction block R(i,j) in the left direction (motion detecting direction). As a consequence, the reaction unit 34_1 is activated.

From time to to time t₁, the active-signal transmitting means 32 transmits the reaction signals from the reaction unit 34_1 to the reaction unit 34_n on time series.

At time t₁, the edge image is moved from the image block B_{i,j} to the image block B_{i,j-1}. At this time, the edge detecting signal s(B_{i,j-1}) is input to the intermediate block M(i,j-1). The intermediate block M(i,j-1) inputs the output trigger signal to the corresponding reaction block R(i,j). Thus, the elapsed-time information output means 33 reads the active values held by the reaction units 34_1 to 34_n, and detects the order (7 in the example of Fig. 15) of the reaction units 34 that hold the active signals at the time. Further, the elapsed-time information output means 33 outputs the detected order information as the ignition signal (elapsed-time information).

Similarly to the first embodiment, the order information is in inverse-proportion to the speed of the edge image in the motion detecting direction. Therefore, the order information is detected, thereby detecting the motion of the edge image.

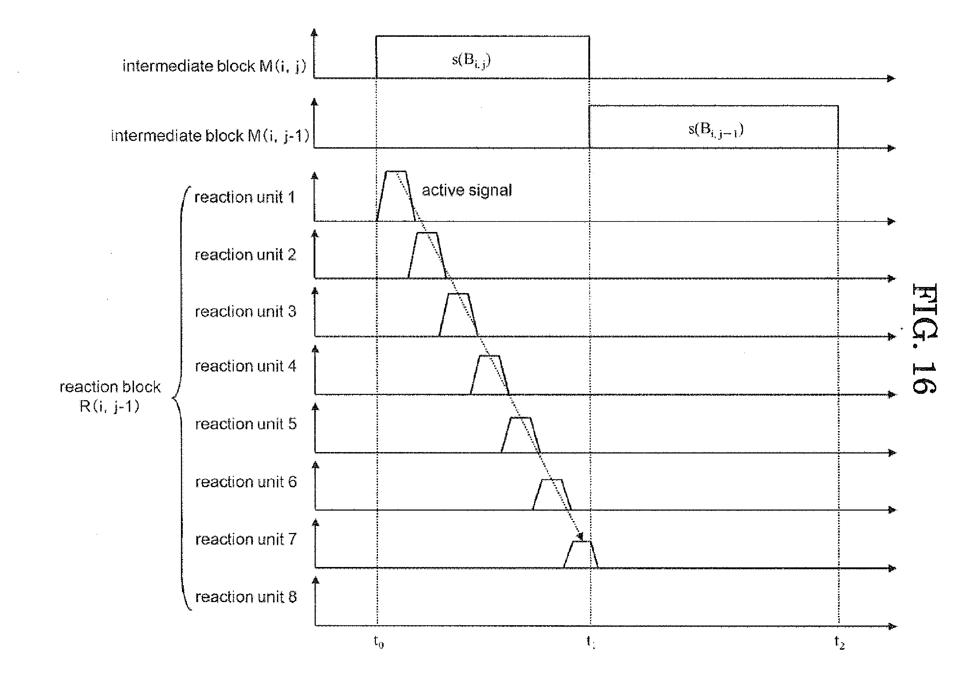

Incidentally, according to the second embodiment, the active-signal transmitting means 32 may transmit the active values between the reaction units 34 while changing the active values in accordance with the monotone function on time series as shown in Fig. 16. In this case, the elapsed-time information output means 33 reads the active values held by the reaction unit 34_1 to 34_n, and detects the active value of the reaction unit 34 (active value of the seventh reaction unit 34_7 in the example shown in Fig. 16) that holds the active signal at the time. Then, the detected active value may be output as the ignition signal (elapsed-time information).

### [Third embodiment]

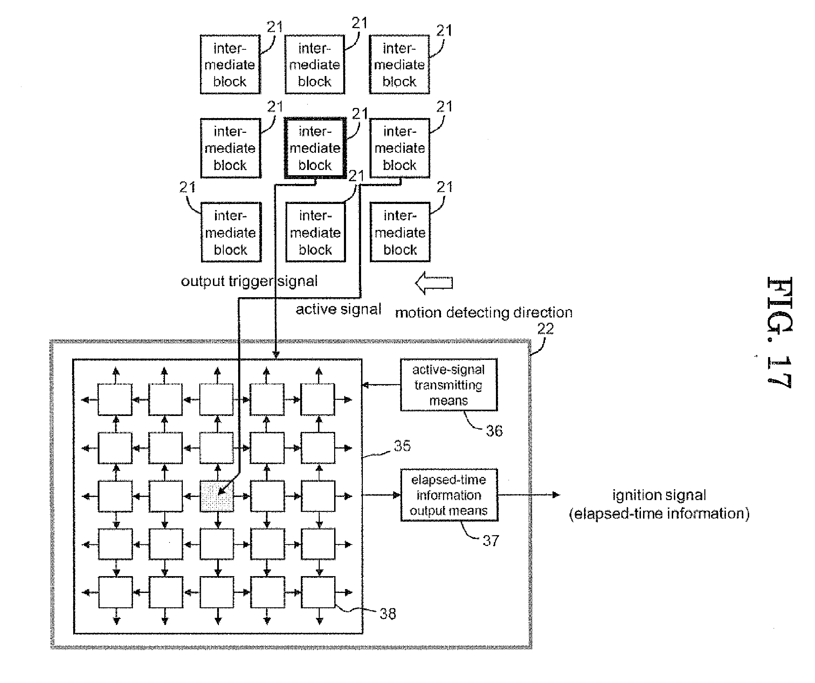

Fig. 17 is a block diagram showing the functional structure of an operation detecting apparatus according to the third embodiment. Incidentally, the hardware structure of the operation detecting apparatus according to the third embodiment is similar to that shown in Fig. 4. Further, the structure of portions other than the reaction block 22 is similar to that shown in Fig. 13 according to the second embodiment.

According to the third embodiment, the reaction block 22 comprises: s reaction net 35; active-signal transmitting means 36; and elapsed-time information output means 37. The reaction net 35 has a structure in which a plurality of the reaction units 38 for storing the active signal are two-dimensionally connected via links. The link has the directivity and sends the signal from the central reaction unit 38 to the reaction unit 38 therearound.

With respect to the two reaction units 38 (herein, "reaction unit 38a" and "reaction unit 38b" for the purpose of a convenience of the description) connected via the link in the reaction net 35, the active-signal transmitting means 36 transfers or propagates, on time series, the active signal of the reaction unit 38a on the input side of the link to the reaction unit 38b on the output side thereof. In this case, the active signal is circularly transmitted to the central reaction unit 38 to the reaction unit 38 therearound.

The elapsed-time information output means 37 outputs, as the elapsed-time information, distribution range information of the reaction net 35 in the reaction unit 38 that holds the active signal upon inputting the output trigger signal. Herein, as the distribution range information, specifically, it is possible to use the radius of the circular distribution or the circular area of the reaction unit 38 that holds the active signal and the integration strength of the active values of the reaction units 38 distributed circularly.

In this case, upon outputting the edge detecting signal of the corresponding image block, the intermediate block 21 outputs the output trigger signal to the corresponding reaction block 22. Simultaneously, the active signal may be outputted to the central reaction unit 38 (refer to Fig. 16) of the reaction net 35 in the reaction block 21 adjacent to the reaction block 22 corresponding to the intermediate block 21 in the motion detecting direction.

Incidentally, according to the third embodiment, the active-signal transmitting means 36 may transmit the active value between the reaction units 38 while changing the active value on time series in accordance with the monotone function. In this case, the elapsed-time information output means 37 detects the active value held in the reaction unit 38 at the outermost end of the circle. Then, the detected active value may be output as the ignition signal (elapsed-time information).

### [Fourth embodiment]

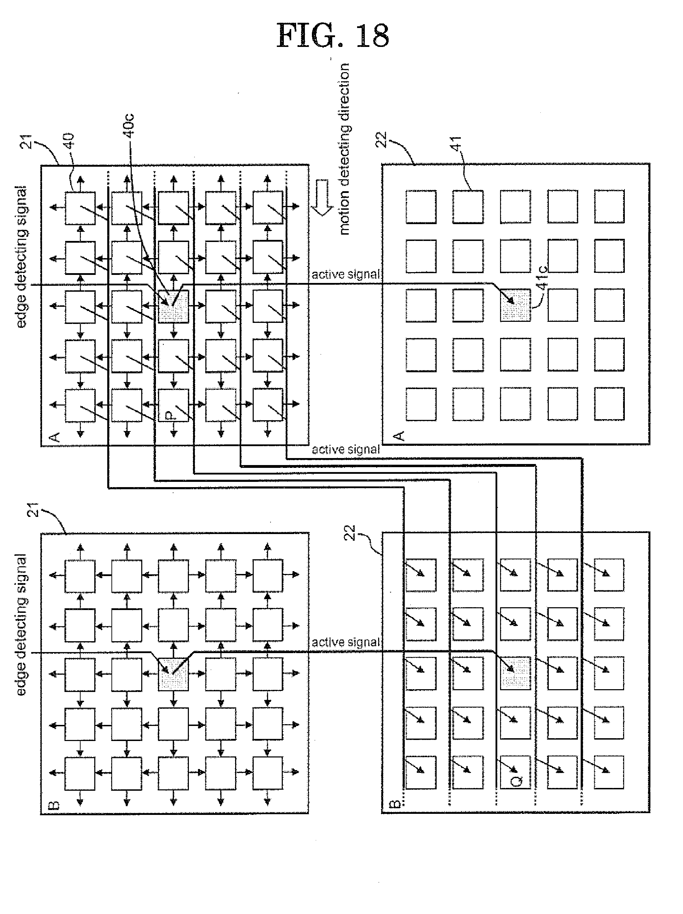

Fig. 18 is a block diagram showing the functional structure of an operation detecting apparatus according to the fourth embodiment. Incidentally, the hardware structure of the operation detecting apparatus according to the fourth embodiment is similar to that shown in Fig. 4. Further, the structure of portions other than the reaction block 22 is similar to that shown in Fig. 13 according to the second embodiment.

The operation detecting apparatus according to the fourth embodiment is an example obtained by precisely structuring that to the model shown in Fig. 1. In the operation detecting apparatus, the intermediate block 21 has an intermediate net in which a plurality of intermediate units 40 for holding the active signal are two-dimensionally connected via links. Further, the reaction block 22 has a plurality of reaction units 41 arranged to corresponding intermediate units 40 in the intermediate block 21.

The edge block detecting means 7 (refer to Fig. 4) sequentially reads frames, and detects whether or not each of image blocks in the frame includes the edge image. Further, the edge block detecting means 7 outputs the edge detecting signal to the intermediate unit 40 (hereinafter, referred to as a "center intermediate unit 40c") in the center of the intermediate net in the intermediate block 21 corresponding to the image block including the edge image.

The intermediate block 21 comprises: active-value initializing means (not shown); active-signal transmitting means (not shown) and active-signal transfer means (not shown).

Upon inputting the active signal to the center intermediate unit 40c, the active-value initializing means initializes the active signal held in the center intermediate unit 40c to an initial value. Further, the active-value initializing means outputs the active signal to all reaction units 41 in the corresponding reaction block 22.

With respect to two intermediate units 40 (herein, "intermediate unit 40a" and "intermediate unit 40b" for the purpose of a convenience of the description) connected via links in the intermediate net, the active-signal transmitting means attenuates the active signal of the intermediate unit 40a on the input side of the link and transfers or propagates, on time series, to the intermediate unit 40b on the output side of the link.

With respect to the intermediate unit 40 other than the center intermediate unit 40c, the active-signal transfer means outputs the active signal held in reaction unit 41 at the same relative position as that of the intermediate unit 40 in the intermediate block 21 adjacent to the corresponding intermediate block 21, from among the reaction units 41 in the reaction block 22 (hereinafter, referred to as "adjacent reaction block") corresponding to the intermediate block 21 adjacent to the corresponding intermediate block 21 in the motion detecting direction. This will be easily described.

For example, referring to Fig. 18, at an intermediate block 21 (hereinafter, referred to as an "intermediate block A") designated by reference numeral A, the relative position in the intermediate block A of an intermediate unit 40 (hereinafter, referred to as an "intermediate unit P") designated by reference numeral P is the second from the left of the center intermediate unit 40c. This is referred to as relative coordinates (-2,0). On the other hand, the intermediate block 21 adjacent to the intermediate block A in the motion detecting direction (in the left direction in Fig. 18) is an intermediate block 21 (hereinafter, referred to as an "intermediate block B") added with reference numeral B.

The reaction block 22 corresponding to the intermediate block A is referred to as a "reaction block A", and the reaction block 22 corresponding to the intermediate block B is referred to as a "reaction block B". The reaction block B corresponding to the intermediate block B adjacent to the intermediate block A in the motion detecting direction (in the left direction in Fig. 18) is an adjacent reaction block. Among the reaction units 41 in the adjacent reaction block B, the reaction unit 41 whose relative position in the adjacent reaction block B is at the same relative position as the relative position (-2,0) of the intermediate unit P in the intermediate block A is a reaction unit 41 (hereinafter, referred to as a "reaction unit Q") added with reference numeral Q in Fig. 18. Therefore, the active-signal transfer means outputs the active signal stored in the intermediate unit P to the reaction unit Q. With respect to other intermediate units 40, the same operation is performed.

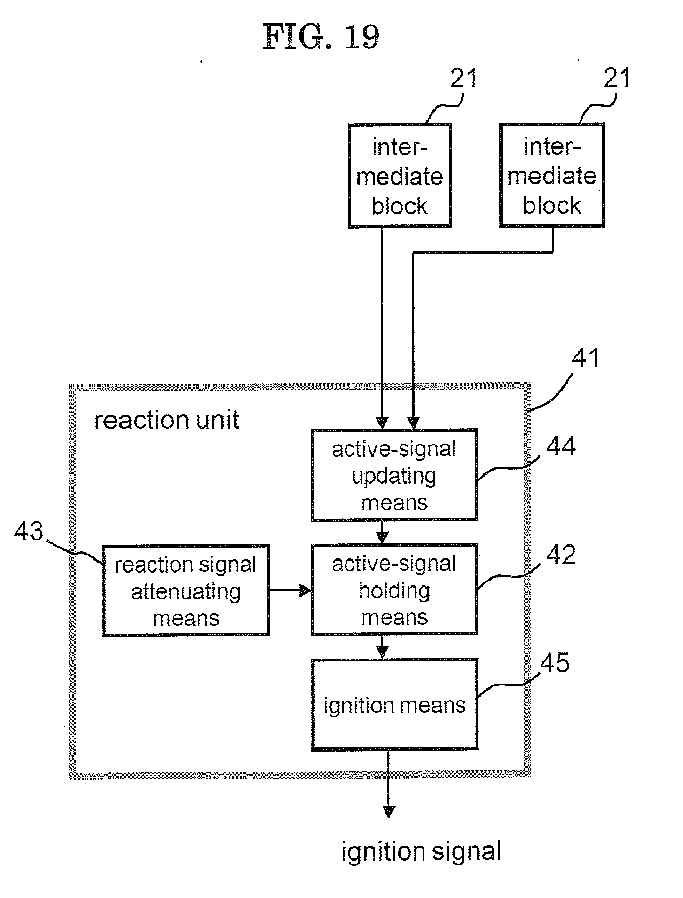

Fig. 19 is a block diagram showing the structure of the reaction unit 41. The reaction unit 41 comprises: active-signal holding means 42; reaction signal attenuating means 43; active-signal updating means 44; and ignition means 45.

The active-signal holding means 42 stores the active signal input from the active-signal transfer means of the intermediate block 21. The reaction signal attenuating means 43 attenuates, on time series, the active signal stored in the active-signal holding means 42. Upon inputting the active signal from the active-signal transfer means or active-value initializing means 24 in the intermediate block 21, the active-signal updating means 44 adds a value of the input active signal to a value of the active signal held in the active-signal holding means 42, thereby updating the active signal held in the active-signal holding means 42. When the active signal held in the active-signal holding means 42 is over a predetermined threshold, the ignition means 45 outputs the active signal as the ignition signal (elapsed-time information).

With the above-mentioned structure, the operation detecting apparatus shown in Fig. 1 can be structured. Incidentally, according to the third embodiment, the two-dimensional array of the intermediate units 40 or reaction units 41 is shown as examples. However, it may be one-dimensionally arrayed similarly to the case shown in Fig. 14.

### Industrial Applicability

The present invention can be used for image processing LSI for detecting the operation. For example, the present invention can be used as an image processing technology used for automobiles for automatically detecting a walking person, one automobile, and moving objects in front of another automobile.

## Claims

1. An operation detecting apparatus comprising:
edge block detecting means that sequentially reads frames of a moving image subjected to edge extracting processing, detects whether or not an image block includes an edge image upon dividing pixels in the frame into the blocks, and outputs an edge detecting signal of the image block including the edge image;
an intermediate layer having a plurality of intermediate blocks corresponding to each of the image blocks; and
an output layer having a plurality of reaction blocks corresponding to the intermediate blocks,
wherein the intermediate block is activated upon outputting the edge detecting signal corresponding to the image block,
the reaction block initializes an active value in accordance with the activation of the intermediate block adjacent to a corresponding intermediate block serving as the reaction block corresponding thereto in the opposite direction of a motion detecting direction of the intermediate block,
holds the active value after the initialization for a predetermined period while changing the active value in accordance with a monotone function on time series, and
outputs, as an ignition signal, information on the level of the active value stored upon activating the corresponding intermediate block.

2. The operation detecting apparatus according to Claim 1, wherein the reaction block comprises:
a plurality of reaction units that are connected in order and hold the active values;
active-value initializing means that initializes the active value of the head reaction unit in accordance with the activation of the adjacent intermediate block;
active-signal transmitting means that transmits the active values of the reaction units in the front order to the reaction units in the back order; and
elapsed-time information output means that outputs, upon activating the corresponding intermediate block, information on the order of the reaction units that hold the active values, as ignition signals.

3. An operation detecting apparatus comprising:
edge block detecting means that sequentially reads frames of a moving image subjected to edge extracting processing, detects whether or not an image block includes an edge image upon dividing pixels in the frame into the blocks, and outputs an edge detecting signal of the image block including the edge image;
an intermediate layer having a plurality of intermediate blocks corresponding to the image blocks; and
an output layer having a plurality of reaction blocks corresponding to the intermediate blocks,
wherein the intermediate block is activated upon outputting the edge detecting signal corresponding to the image block, initializes the active value into an initial value, and holds the active value after the initialization for a predetermined period while changing the active value in accordance with a monotone function on time series, and
the reaction block adds the active value of an adjacent intermediate block serving as the intermediate block adjacent to the corresponding intermediate block in the opposite direction of the motion detecting direction to the active value of the corresponding intermediate block, and outputs, as the ignition signal, information on the level of the active value when the addition value is not less than a predetermined threshold set larger than the initial value.

4. The operation detecting apparatus according to Claim 1 or 3, wherein the intermediate block comprises:
a plurality of reaction units that are connected in order and hold the active values;
active-value initializing means that initializes the active value of the head reaction unit in accordance with the activation of the adjacent intermediate block; and
active-signal transmitting means that transmits the active values of the reaction units in the front order to the reaction units in the back order,
wherein the reaction block comprises elapsed-time information output means that outputs, upon activating the corresponding intermediate block, information on the order of the reaction units that store the active values, as ignition signals.

5. The operation detecting apparatus according to Claim 1 any one of Claims 1 to 4, further comprising:
an up output-layer that detects the motion in the up direction, a down output-layer that detects the motion in the down direction, a left output-layer that detects the motion in the left direction, and a right output-layer that detects the motion in the right direction, as the output layers.

6. The operation detecting apparatus according to Claim 1 any one of Claims 1 to 4, further comprising:
the four intermediate layers corresponding to four quadrants that obtained by dividing the frame.

7. The operation detecting apparatus according to Claim 6, further comprising:
an up output-layer that detects the motion in the up direction, a down output-layer that detects the motion in the down direction, a left output-layer that detects the motion in the left direction, and a right output-layer that detects the motion in the right direction, as the output layers, to the intermediate layers corresponding to the quadrants.

8. An operation detecting apparatus comprising:
edge block detecting means that that sequentially reads frames of a moving image subjected to edge extracting processing, detects whether or not an image block includes an edge image upon dividing pixels in the frame into the blocks, and outputs an edge detecting signal of the image block including the edge image; and
a set of a plurality of motion detecting blocks that detect the motion of the edge image in a predetermined motion detecting direction, aligned to the image blocks,
wherein the motion detecting block generates, upon detecting an edge detecting signal of the image block adjacent to a corresponding image block in the opposite direction of the motion detecting direction, elapsed-time information as information on elapsed time from the detecting time, and holds the elapsed-time information while changing the elapsed-time information with a monotone function on time series, and
outputs, upon outputting the edge detecting signal of the corresponding image block, the elapsed-time information stored at the output time.

9. The operation detecting apparatus according to Claim 8, further comprising:
motion determining means that determines, when the motion detecting block outputs the elapsed-time information, the type of motion on the basis of the position of the image block that outputs the elapsed-time information in the frame and a pattern of the elapsed-time information.

10. The operation detecting apparatus according to Claim 8 or 9, further comprising:
the set of motion detecting blocks corresponding to the up, down, left, and right motion detecting directions.

11. The operation detecting apparatus according to any one of Claims 8 to 10, wherein the motion detecting block comprises:
an intermediate block that outputs an active signal and an output trigger signal in accordance with the edge detecting signal; and
a reaction block that generates and outputs elapsed-time information on the basis of the active signal and output trigger signal,
wherein the reaction block comprises:
active-value storing means that stores a specific active value;
active-value initializing means that sets the active value as a predetermined initial value upon starting to inputting the active signal;
active-value changing means that changes the active value on time series in accordance with an active-value changing function serving as a predetermined monotone function; and
elapsed-time information output means that outputs, upon inputting the output trigger signal, an output value as a value calculated by the active value at the time or a predetermined output function from the active value as the elapsed-time information, and
the intermediate block outputs, upon outputting an edge detecting signal of the image block corresponding to the motion detecting block, the output trigger signal to the reaction block belonging to the motion detecting block, and further outputs the active signal to the reaction block belonging to a motion detecting block adjacent to the motion detecting block in the motion detecting direction.

12. The operation detecting apparatus according to any one of Claims 8 to 10, wherein the motion detecting block comprises:
an intermediate block that outputs an active signal and an output trigger signal in accordance with the edge detecting signal; and
a reaction block generates and outputs the elapsed-time information on the basis of the active signal and output trigger signal, and
the reaction block comprises:
a reaction unit array having a plurality of reaction units for holding the active signal, aligned in order;
active-signal transmitting means that sequentially transfers or propagates the active signal on time series from the head reaction unit to the last reaction unit; and
elapsed-time information output means that outputs, upon inputting the output trigger signal, order information of the array of reaction units of the reaction units that stores the active signal as the elapsed-time information, and
the intermediate block outputs, upon outputting an edge detecting signal of the image block corresponding to the motion detecting block, the output trigger signal to the reaction block belonging to the motion detecting block, and further outputs the active signal to the head reaction unit on the array of reaction units of the reaction blocks belonging to the motion detecting block adjacent to the motion detecting block in the motion detecting direction.

13. The operation detecting apparatus according to Claim 12, wherein the active-signal transmitting means sequentially transfers or propagates the active signal in accordance with a predetermined active-value changing function from the head reaction unit to the last reaction unit while changing the active signal on time series, and
the elapsed-time information output means outputs a value of the active signal, upon inputting the output trigger signal, as the elapsed-time information.

14. The operation detecting apparatus according to any one of Claims 8 to 10, wherein the motion detecting block comprises:
an intermediate block that outputs the active signal and output trigger signal in accordance with the edge detecting signal; and
a reaction block that generates and outputs the elapsed-time information on the basis of the active signal and output trigger signal,
the reaction block comprises:
a reaction net that two-dimensionally connects a plurality of reaction units for storing the active signal via a link;
active-signal transmitting means that transfers or propagates, with respect to two reaction units connected via the link on the reaction net, the active signal of the reaction unit on the input side of the link to the reaction unit on the output side of the link on time series; and
elapsed-time information output means that outputs, upon inputting the output trigger signal, distribution range information of the reaction units for storing the active signal, on the reaction net, as the elapsed-time information, and
the intermediate block outputs, upon outputting an edge detecting signal of the image block corresponding to the motion detecting block, the output trigger signal to the reaction block belonging to the motion detecting block, and further outputs the active signal to the reaction unit in the center of the reaction net of the reaction blocks belonging to the motion detecting block adjacent to the motion detecting block in the motion detecting direction.

15. The operation detecting apparatus according to Claim 14, wherein the active-signal transmitting means sequentially transfers or propagates, with respect to two reaction units connected via a link on the reaction net, the active signal of the reaction unit on the input side of the link to the reaction unit on the output side of the link while changing the active signal in accordance with a predetermined active-value changing function, and
the elapsed-time information output means outputs, upon inputting the output trigger signal, a value of the active signal as the elapsed-time information.

16. The operation detecting apparatus according to any one of Claims 8 to 10, wherein the motion detecting block comprises:
an intermediate block having an intermediate net that two-dimensionally connects a plurality of intermediate units for storing the active signal via a link; and
a reaction block having a plurality of reaction units arranged to the individual intermediate units in the intermediate block, and
the edge block detecting means sequentially reads the frames, detects whether or not the image block in the frame includes the edge image, outputs the edge detecting signal to a center intermediate unit as an intermediate unit in the center of the intermediate net in the intermediate block corresponding to the image block including the edge image, the intermediate block comprises:
active-value initializing means that initializes, upon inputting the active signal to the center intermediate unit, the active signal stored in the center intermediate unit into an initial value, and thereafter outputs the active signal to all reaction units in the reaction block belonging to the motion detecting block;
active-signal transmitting means that attenuates, with respect to two intermediate units connected by a link on the intermediate net, the active signal of the intermediate unit on the input side of the link and transfers or propagates the active signal to the intermediate unit on the output side of the link on time series;
active-signal transfer means that outputs, with respect to the intermediate units other than the center intermediate unit, the active signal held in the reaction unit whose relative position in the adjacent reaction blocks is the same relative position of that of the intermediate unit, from the reaction units in the adjacent reaction blocks serving as the reaction block corresponding to the intermediate block adjacent to the intermediate block in the motion detecting direction, and
the reaction unit in the reaction block comprises:
active-signal holding means that stores the active signal input from the active-signal transfer means;
reaction signal attenuating means that attenuates the active signal stored in the active-signal holding means;
active-signal updating means that updates the active signal stored in the active-signal holding means by adding a value of the input active signal to a value of the active signal stored in the active-signal holding means, when the active-signal transfer means or the active-value initializing means inputs the active signal; and
ignition means that outputs, when the active signal stored in the active-signal holding means is over a predetermined threshold, the active signal or ignition signal as the elapsed-time information.

17. The operation detecting apparatus according to any one of Claims 11 to 16, wherein the motion detecting block comprises one intermediate block and four reaction blocks corresponding to up, down, left, and right motion detecting directions.

18. The operation detecting apparatus according to any one of Claims 11 to 16, wherein the motion detecting block comprises:
four intermediate blocks corresponding to four up-, down-, left-, and right-quadrants obtained by dividing the frame, with respect to the intermediate block; and
four reaction blocks corresponding to the intermediate blocks in up, down, left, and right motion detecting directions.

19. A computer readable and executable program for enabling functioning as the operation detecting apparatus according to any one of Claims 1, 3, and 8 to 18.

20. An operation detecting method comprising:
an edge block detecting step of detecting, with respect to image blocks obtained by dividing a frame of a moving image subjected to edge extracting processing, sequentially-input, into blocks, whether or not the image block includes an edge image and outputting an edge detecting signal of the image block including the edge image;
an elapsed-time information generating step of generating, to an adjacent block serving as an image block adjacent to a detecting block serving as the image block having the output edge detecting signal in the motion detecting direction, elapsed-time information serving as information on elapsed time from the start time for continuously outputting the edge detecting signal in the detecting block; and
an elapsed-time information output step of outputting the elapsed-time information generated for the adjacent block, upon starting to output the edge detecting signal in the adjacent block.

21. The operation detecting method according to Claim 20, further comprising:
a motion determining step of outputting the elapsed-time information of the image block in the elapsed-time information output step, and thereafter determining the type of motion on the basis of the position of the image block that outputs the elapsed-time information and a pattern of the elapsed-time information.
